(19) Europäisches Patentamt
European Patent Office
Office européen des brevets

(11) **EP 1 996 900 B1**

(12) **EUROPÄISCHE PATENTSCHRIFT**

(45) Veröffentlichungstag und Bekanntmachung des Hinweises auf die Patenterteilung:
**26.09.2012 Patentblatt 2012/39**

(21) Anmeldenummer: **07723462.3**

(22) Anmeldetag: **21.03.2007**

(51) Int Cl.:
***G01D 5/243*** *(2006.01)*

(86) Internationale Anmeldenummer:
**PCT/EP2007/002505**

(87) Internationale Veröffentlichungsnummer:
**WO 2007/107353 (27.09.2007 Gazette 2007/39)**

(54) **SENSOR ZUR WEGMESSUNG ÜBER DIE PHASENVERSCHIEBUNG DES MAGNETFELDES BEI EINER RC-VERZÖGERUNGSKETTE**

SENSOR FOR MEASURING DISTANCE USING THE PHASE SHIFT OF THE MAGNETIC FIELD IN AN RC DELAY CHAIN

CAPTEUR DE MESURE DE COURSE PAR LE BIAIS DU DEPHASAGE DU CHAMP MAGNETIQUE DANS LE CAS D'UN LIGNE A RETARD RC

(84) Benannte Vertragsstaaten:
**AT BE BG CH CY CZ DE DK EE ES FI FR GB GR HU IE IS IT LI LT LU LV MC MT NL PL PT RO SE SI SK TR**

(30) Priorität: **21.03.2006 DE 102006012952**

(43) Veröffentlichungstag der Anmeldung:
**03.12.2008 Patentblatt 2008/49**

(73) Patentinhaber: **Hochschule Mannheim, Technik, Gestaltung und Sozialwesen 68163 Mannheim (DE)**

(72) Erfinder:
• **CASTRONOVO, Angelo 74360 Ilsfeld (DE)**
• **VOIGT, Burkhard 68239 Mannheim (DE)**
• **HERMELINK, Leszek 68239 Mannheim (DE)**
• **PASQUESI, Giancarlo 65187 Wiesbaden (DE)**

(74) Vertreter: **Müller-Boré & Partner Patentanwälte Grafinger Straße 2 81671 München (DE)**

(56) Entgegenhaltungen:
**US-A- 4 007 454**

## Beschreibung

Die vorliegende Erfindung betrifft eine Vorrichtung und ein Verfahren zur Positionsbestimmung und insbesondere zur kontaktlosen Positions-, Winkel- und/oder Bewegungsmessung.

Derzeit übliche Positions- oder Wegsensoren arbeiten mit Bändern, in die kleine Dauermagnete implementiert sind. Die Position dieser kleinen Magnete wird über magnetfeldabhängige Widerstände erfasst. Die aktuelle Position bzw. Lage zwischen den Magneten und den magnetfeldabhängigen Widerständen wird ausgezählt, d.h. die Anzahl der Magnete, die von den Widerständen passiert wurde, wird detektiert und damit die Position der Widerstände relativ zu den Magneten ermittelt. Zur Verbesserung der räumlichen Auflösung wird oft eine analoge Zwischeninterpolation vorgenommen. Für eine sichere Funktion müssen die magnetfeldabhängigen Widerstände nah am Magnetband positioniert sein.

US 4,007,454 offenbart eine Vorrichtung zur Fernerfassung von Winkelpositionen, - geschwindigkeiten und/ oder Rotationsrichtungen von Objekten. Dabei wird ein rotierendes elektrisches Feld in der Nähe eines rotierenden Elements erzeugt, wobei die Rotationsachsen des elektrischen Feldes und des rotierenden Elements übereinstimmen. In dieser Rotationsachse ist ein Sensor für das elektrische Feld positioniert, um Änderungen des elektrischen Feldes zu detektieren, wenn dieses das rotierende Element passiert. Der Sensor erzeugt ein elektrisches Ausgangssignal, dessen relative Phase von der Winkelposition des rotierenden Elements abhängt. Das rotierende elektrische Feld wird dabei durch sechs auf einem Kreis angeordnete Elektroden erzeugt, die nacheinander periodisch mit elektrischen Signalen aus einem Phasen-Splitter versorgt werden.

Aufgabe der vorliegenden Erfindung ist es, eine Vorrichtung und ein Verfahren zur einfacheren und kostengünstigeren Positionsbestimmung mit einem hohen Auflösungsvermögen bereitzustellen. Diese Aufgabe wird durch eine Vorrichtung und ein Verfahren mit den im Anspruch 1 oder 4 bzw. 10 oder 12 angegebenen Merkmalen gelöst. Bevorzugte Ausführungsformen sind Gegenstand der abhängigen Ansprüche.

Somit stellt die vorliegende Erfindung insbesondere eine Vorrichtung zur Positionsbestimmung bereit, welche umfasst:

- zumindest ein Verzögerungsnetzwerk mit

-- zumindest einem ersten Verzögerungsglied, das ausgelegt ist, über zumindest ein an einer ersten Ausgabeposition bzw. Sendeposition des Verzögerungsnetzwerks angeordnetes erstes Ausgabeelement bzw. Sendeelement ein erstes periodisches Ausgabesignal bzw. Sendesignal auszugeben; und
-- zumindest einem zweiten Verzögerungsglied, das ausgelegt ist, über zumindest ein an einer zweiten, von der ersten verschiedenen Ausgabeposition bzw. Sendeposition des Verzögerungsnetzwerks angeordnetes zweites Ausgabeelement bzw. Sendeelement, ein zweites periodisches Ausgabesignal bzw. Sendesignal auszugeben, dessen Phase relativ zum ersten Ausgabesignal um eine Verzögerungsphase verschoben ist; und

- eine Sensoreinrichtung, welche zumindest ein relativ zum Verzögerungsnetzwerk bewegbares Sensorelement umfasst, welches ausgelegt ist, abhängig von der Position des Sensorelements relativ zum Verzögerungsnetzwerk zumindest eines der Ausgabesignale bzw. Sendesignale zumindest teilweise als periodisches Sensorsignal zu erfassen, wobei die Sensoreinrichtung ausgelegt ist, eine Phasenverschiebung des Sensorsignals relativ zu einem periodischen Referenzsignal zu ermitteln, dessen Phase relativ zum ersten Ausgabesignal bzw. Sendesignal um eine Referenzphase verschoben ist,

wobei die Verzögerungsglieder jeweils einen Verzögerungssignaleingang zum Erfassen eines Verzögerungseingangssignals aufweisen und ausgelegt sind, jeweils ein um eine Verzögerungsphase relativ zum Verzögerungseingangssignal verschobenes Verzögerungsausgangssignal zu erzeugen, und
wobei das Verzögerungsnetzwerk eine Verzögerungskette umfasst, in der eine Vielzahl von Verzögerungsgliedern derart aufeinander folgend, insbesondere hintereinander geschaltet ist, dass abgesehen von einem in der Verzögerungskette ersten Verzögerungsglied für jedes weitere Verzögerungsglied der Verzögerungssignaleingang mit einem Verzögerungssignalausgang des in der Verzögerungskette vorangehenden Verzögerungsgliedes zur Übertragung des Verzögerungsausgangssignals der vorangehenden Verzögerungsgliedes in Signalverbindung steht. Damit durchläuft ein periodisches Eingangssignal, das über den Verzögerungssignaleingang des ersten Verzögerungsglieds an die Verzögerungskette übertragen wird nacheinander jedes Verzögerungsglied und wird jeweils um eine bestimmte bzw. bestimmbare Phasenverschiebung verschoben. Dabei sind vorzugsweise zumindest einige, besonders bevorzugt alle der Verzögerungsglieder im wesentlichen funktionsgleich aufgebaut.

Damit ist die erfindungsgemäße Vorrichtung ausgelegt, die Phasenlage des durch das Sensorelement erfassten zeitlich periodischen Signals relativ zu den Phasenlagen der zeitlich periodischen Ausgabesignale zu ermitteln. Das erfasste Signal ist dabei von der Position des Sensorelements relativ zum Verzögerungsnetzwerk, also relativ zur ersten Ausgabeposition bzw. zur zweiten Ausgabeposition abhängig. Insbesondere könnte der Anteil des ersten Ausgabesignals bzw. des zweiten Ausgabesignals am erfassten Signal von der Position des Sensorelements relativ zum Verzögerungsnetzwerk, und insbesondere relativ zu der ersten bzw. zweiten Ausgabeposition abhängen. Insbesondere hängt somit die Phasenlage des erfassten Signals relativ zu den Ausgabesignalen von der Position des Sensorelements relativ zu den Ausgabepositionen ab. Über die durch die Sensoreinrichtung ermittelte Phasenlage des im Sensorelement erfassten Signals relativ zu einem Referenzsignal und insbesondere relativ zu den Ausgabesignalen lässt sich die Position des Sensorelements relativ zum Verzögerungsnetzwerk bestimmen. Dabei fungiert vorzugsweise das Verzögerungsnetzwerk als Sender für das Ausgabesignal bzw. Sendesignal und das relativ zum Verzögerungsnetzwerk bewegbare Sensorelement als Empfänger für dieses Signal.

In einem weiteren Aspekt stellt die Erfindung insbesondere eine Vorrichtung zur Positionsbestimmung bereit, welche umfasst:

- zumindest ein Ausgabeelement bzw. Sendeelement, welches ausgelegt ist, ein periodisches Ausgabesignal bzw. Sendesignal auszugeben,
- zumindest ein relativ zum Ausgabeelement bewegbares Verzögerungsnetzwerk mit

  -- zumindest einem an einer ersten Sensorposition des Verzögerungsnetzwerks angeordneten ersten Sensorelement zum Erfassen eines ersten periodischen Sensorsignals, wobei das Verzögerungsnetzwerk ausgelegt ist, in Abhängigkeit vom erfassten ersten Sensorsignal an zumindest einem ersten Messausgang eine erste periodische Messsingalkomponente eines ersten periodischen Messsignals auszugeben, deren Phase relativ zum ersten Sensorsignal um eine erste Verzögerungsphase des ersten Messausgangs verschoben ist;
  -- zumindest einem an einer zweiten, von der ersten verschiedenen Sensorposition des Verzögerungsnetzwerks angeordneten zweiten Sensorelement zum Erfassen eines zweiten periodischen Sensorsignals, wobei das Verzögerungsnetzwerk ausgelegt ist, in Abhängigkeit vom erfassten zweiten Sensorsignal an dem zumindest einen ersten Messausgang eine zweite periodische Messsingalkomponente des ersten periodischen Messsingals auszugeben, deren Phase relativ zum zweiten Sensorsignal um eine zweite, von der ersten verschiedene Verzögerungsphase des ersten Messausgangs verschoben ist; und

- eine Sensoreinrichtung, welche ausgelegt ist, eine erste Phasenverschiebung des ersten periodischen Messsignals relativ zu einem periodischen Referenzsignal zu ermitteln. Vorzugsweise ist die Phase des Referenzsignals relativ zum Ausgabesignal um eine Referenzphase verschoben.

Hierbei fungiert vorzugsweise das Verzögerungsnetzwerk als Empfänger für das Ausgabesignal bzw. Sendesignal, das von dem zumindest einen relativ zum Verzögerungsnetzwerk bewegbaren Ausgabe- bzw. Sendeelement als Sender für dieses Signal ausgeben bzw. ausgesendet oder ausgestrahlt wird. In diesem Aspekt ist die Vorrichtung ausgelegt, die Phasenlage des zumindest einen, bzw. des ersten, zeitlich periodischen Messsignals relativ zur Phasenlagen des zeitlich periodischen Ausgabesignals zu ermitteln. Das Messsignal umfasst dabei zumindest eine zeitlich periodische Messsignalkomponente in Abhängigkeit von einem von einem Sensorelement erfassten, zeitlich periodischen Sensorsignal, wobei die Phase bzw. Phasenlage der Messsignalkomponente gegenüber der Phase bzw. Phasenlage des Sensorsignals um eine für das Sensorelement insbesondere in Bezug auf den Messausgang innerhalb des Verzögerungsnetzwerks spezifische Verzögerungsphase verschoben bzw. versetzt ist. Ein anderes Sensorelement weist in Bezug auf den ersten Messausgang vorzugsweise eine andere Verzögerungsphase auf. Andererseits weist das Sensorelement in Bezug auf einen anderen , z.B. zweiten, Messausgang vorzugsweise ebenfalls eine andere Verzögerungsphase auf, als in Bezug auf den zumindest einen ersten Messausgang. Das erfasste Sensorsignal ist bzw. die erfassten Sensorsignale sind dabei von der Position des Ausgabeelements relativ zum Verzögerungsnetzwerk, also relativ zur ersten Sensorposition bzw. zur zweiten Sensorposition abhängig. Insbesondere könnte der Anteil des ersten Sensorsignals bzw. des zweiten Sensorsignals am erfassten Signal und damit der Anteil der ersten Messsignalkomponente und der zweiten Messsignalkomponente am Messsignal von der Position des Ausgabeelements relativ zum Verzögerungsnetzwerk, und insbesondere relativ zu der ersten bzw. zweiten Sensorposition abhängen. Insbesondere hängt somit die Phasenlage des Messsignals relativ zum Ausgabesignal von der Position des Ausgabeelements relativ zu den Sensorpositionen ab. Über die durch die Sensoreinrichtung ermittelte Phasenlage des Messsignals relativ zu einem Referenzsignal und insbesondere relativ zum Ausgabesignal lässt sich die Position des Ausgabe- bzw. Sendeelements relativ zum Verzögerungsnetzwerk bestimmen.

Die erfindungsgemäße Vorrichtung ist somit nicht auf die Detektion und Auswertung von Signalintensitäten angewiesen. Anstelle dessen basiert die Positionsbestimmung auf der Ermittlung relativer Phasenlagen von Signalen, vorzugsweise im wesentlichen unabhängig von deren Intensitäten. Damit erreicht die erfindungsgemäße Vorrichtung eine hohe Sensitivität und ein hohes Auflösungsvermögen bei der Positionsbestimmung. Insbesondere erreicht die Erfindung dies durch eine phasenabhängige und phasenaufgelöste Kopplung zwischen einem Verzögerungsnetzwerk und einer relativ zum Verzögerungsnetzwerk bewegbaren Komponente, die je nach Kopplungsrichtung bzw. Signalrichtung als Sensorelement und damit als Empfänger oder als Ausgabe- bzw. Sendeelement und damit als Sender für ein zeitlich periodisches Signal fungiert. Das Verzögerungsnetzwerk fungiert demnach abhängig von der Kopplungsrichtung als Sender oder als Empfänger.

Vorzugsweise umfasst das Verzögerungsnetzwerk neben zusätzlich zum ersten Messausgang zumindest einen zweiten Messausgang und ist ausgelegt

- in Abhängigkeit vom erfassten ersten Sensorsignal an dem zumindest einen zweiten Messausgang eine zweite periodische Messsingalkomponente eines zweiten periodischen Messsingals auszugeben, deren Phase relativ zum ersten Sensorsignal um eine erste Verzögerungsphase des zweiten Messausgangs verschoben ist; und
- in Abhängigkeit vom erfassten zweiten Sensorsignal an dem zumindest einen zweiten Messausgang eine zweite periodische Messsingalkomponente des zweiten periodischen Messsingals auszugeben, deren Phase relativ zum zweiten Sensorsignal um eine zweite Verzögerungsphase des zweiten Messausgangs verschoben ist, und

wobei die Sensoreinrichtung ausgelegt ist, eine zweite Phasenverschiebung des zweiten periodischen Messsignals relativ zum periodischen Referenzsignal zu ermitteln.

Dabei ist die Sensoreinrichtung vorzugsweise ausgelegt, die Differenz zwischen der ersten Phasenverschiebung des ersten periodischen Messsignals relativ zum periodischen Referenzsignal und der zweiten Phasenverschiebung des zweiten periodischen Messsignals relativ zum periodischen Referenzsignal zu ermitteln und abhängig von dieser Differenz die Position des Ausgabeelements relativ zum Verzögerungsnetzwerk zu bestimmen.

Die erfindungsgemäße Vorrichtung kann je nach Ausgestaltung und Anordnung der Ausgabeelemente bzw. der Sensorelemente des Verzögerungsnetzwerks zur Bestimmung einer räumlich linearen Position und/oder einer Winkelposition, insbesondere eines Drehwinkels ausgelegt sein. Auch die Positionsbestimmung entlang eines gekrümmten Pfades ist möglich. Die erste und/oder zweite Ausgabeposition des Verzögerungsnetzwerks bzw. die erste und/oder zweite Sensorposition des Verzögerungsnetzwerks ist dabei zumindest in einer räumlichen Dimension festgelegt, d.h. es lässt sich für die erste bzw. zweite Ausgabeposition bzw. Sensorposition des Verzögerungsnetzwerks zumindest in einer räumlichen Dimension ein Wert und/oder Wertebereich angeben bei dem bzw. innerhalb dessen das erste bzw. zweite Ausgabeelement bzw. Sensorelement des Verzögerungsnetzwerks angeordnet ist. Insbesondere unterscheiden sich die erste und zweite Ausgabeposition bzw. die erste und zweite Sensorposition des Verzögerungsnetzwerks, also die Position des ersten und zweiten Ausgabeelements bzw. Sensorelements des Verzögerungsnetzwerks in dieser räumlichen Dimension voneinander. Damit ist vorzugsweise eine Positionsbestimmung entlang dieser räumlichen Dimension möglich. In den anderen räumlichen Dimensionen könnte das erste und/oder zweite Ausgabeelement bzw. Sensorelement des Verzögerungsnetzwerks auch eine größere Ausdehnung aufweisen und insbesondere könnten die Ausgabeelemente bzw. Sensorelemente des Verzögerungsnetzwerks in diesen Dimensionen auch überlappen. In einem rechtwinkligen Koordinatensystem mit einer x-, einer y- und einer z-Achse könnten sich die Ausgabepositionen bzw. Sensorpositionen des Verzögerungsnetzwerks beispielsweise in der x-Koordinate unterscheiden, während sie in der y- und/oder der z-Koordinate überlappen oder übereinstimmen. Damit wäre beispielsweise eine Bestimmung einer Position in x-Richtung möglich.

In einer bevorzugten Ausführungsform ist die erste und/oder zweite Ausgabeposition bzw. Sensorposition des Verzögerungsnetzwerks, also die räumliche Positionierung des ersten und/oder zweiten Ausgabeelements bzw. Sensorelements des Verzögerungsnetzwerks in zwei räumlichen Dimensionen festgelegt bzw. eingeschränkt. In einer dritten Raumdimension könnten die Ausgabeelemente bzw. Sensorelemente des Verzögerungsnetzwerks große Ausdehnung aufweisen, so dass deren Ausgabesignale bzw. die erfassten Signale in dieser Raumdimension vorzugsweise über einen großen Bereich ausgegeben bzw. erfasst werden können.

Das Sensorelement könnte bzw. die Sensorelemente könnten zusätzlich zu dem zeitlich periodischen Sensorsignal auch nicht-periodische Signalkomponenten erfassen. Ebenso könnten die Verzögerungsglieder bzw. könnte das Ausgabeelement zusätzlich zu den zeitlich periodischen Ausgabesignalen auch nicht-periodische Signalkomponenten ausgeben. Vorzugsweise wird zur Positionsbestimmung im wesentlichen der periodische, also der sich periodisch zeitlich verändernde Signalanteil, und insbesondere die relativen Phasenlagen bzw. Phasenverschiebungen der periodischen Signalanteile herangezogen. Die relative Phasenlage bzw. Phasenverschiebung stellt dabei ein Maß für das Verhältnis zwischen der zeitlichen Verschiebung der Maxima zweier Signale und dem zeitlichen Abstand aufeinander folgender Maxima in einem der Signale dar. Auch die relative Lage von Nulldurchgängen von Signalen könnte als Maß für eine relative Phasenlage bzw. Phasenverschiebung dienen. Die zu vergleichenden periodischen Signale weisen dabei dieselbe Frequenz, also denselben zeitlichen Abstand aufeinander folgender Maxima auf. Als Referenzsignal könnte vorzugsweise eines der Ausgabesignale dienen, das über einen Referenzsensor erfasst und/oder über eine Referenzsignalverbindung an die Sensoreinrichtung übertragen wird. Als Referenzsignal könnte auch ein Spannungs- und/oder Stromsignal eines Spannungs- bzw. Stromgenerators dienen.

Vorzugsweise umfasst das Verzögerungsnetzwerk zumindest ein erstes und ein zweites Verzögerungsglied, die jeweils das erste bzw. zweite Sensorelement umfassen.

Vorzugsweise umfasst das Verzögerungsnetzwerk mehr als zwei Verzögerungsglieder, besonders bevorzugt mehr als fünf, noch mehr bevorzugt mehr als 20, am meisten bevorzugt umfasst das Verzögerungsnetzwerk mehr als 50 Verzögerungsglieder.

Weiter bevorzugt umfassen die Verzögerungsglieder jeweils eine Spannungsteilerschaltung mit jeweils einem seriellen Impedanzglied und einem parallelen Impedanzglied derart, dass das Verzögerungseingangssignal an einer Serienschaltung aus dem seriellen und dem parallelen Impedanzglied anliegt und das am parallelen Impedanzglied anliegende Signal das Verzögerungsausgangssignal bildet.

Vorzugsweise unterscheiden sich die Phasenwinkel des seriellen und des parallelen Impedanzgliedes voneinander, d.h. das Verhältnis zwischen Reaktanz und Resistanz des seriellen Impedanzgliedes unterscheidet sich von dem Verhältnis zwischen Reaktanz und Resistanz des parallelen Impedanzgliedes. Vorzugsweise umfasst das erste und/ oder zweite Impedanzglied ein resistives und/oder ein kapazitives und/oder ein induktives Glied. Besonders bevorzugt umfasst zumindest ein Verzögerungsglied einen Hochpass und/oder einen Tiefpass. Besonders bevorzugt sind die Verzögerungseingangs- bzw. Verzögerungsausgangssignale elektrische Strom- und/oder Spanngungssignale und die Verzögerungsglieder sind vorzugsweise elektrische bzw. elektronische Schaltungen.

In einer besonders bevorzugten Ausführungsform umfasst das Verzögerungsnetzwerk eine Vielzahl von Verzögerungsgliedern, deren Ausgabeelemente im wesentlichen entlang einer räumlichen Dimension, insbesondere entlang einer Gerade, äquidistant angeordnet sind und deren Verzögerungsphase in der Reihenfolge der räumlichen Anordnung der Ausgabeelemente eine ansteigende Folge mit gleichen Differenzen bzw. Phasenunterschieden zwischen aufeinander folgenden Folgegliedern bzw. aufeinander folgenden Verzögerungsgliedern bilden.

Vorzugsweise umfasst die Vorrichtung zumindest zwei Verzögerungsnetzwerke, deren Ausgabesignale unterschiedliche Frequenzen aufweisen. Besonders bevorzugt sind die Ausgabeelemente der zumindest zwei Verzögerungsnetzwerke entlang unterschiedlicher räumlicher Dimensionen, insbesondere in unterschiedliche Raumrichtungen angeordnet. Damit ist es möglich besonders zuverlässig eine Positionsbestimmung in zwei oder drei Raumdimensionen vorzunehmen.

Vorzugsweise umfasst zumindest eines der Ausgabeelemente ein Senderelement bzw. eine Sendeantenne zum Erzeugen eines elektromagnetischen Feldes, wobei das Sensorelement vorzugsweise einen induktiven Sensor, also einen Magnetfeldsensor, und/oder einen kapazitiven Sensor, also einen Sensor für ein elektrisches Feld umfasst.

Damit bietet die vorliegende Erfindung vorzugsweise eine Vorrichtung zur berührungsfreien Positionsbestimmung. Es findet somit vorzugsweise kein direkter mechanischer Kontakt, bzw. keine an einen direkte mechanischen Kontakt gebundene Signalübertragung zwischen Ausgabeelementen und Sensorelement statt. In einer bevorzugten Ausführungsform ist das Senderelement bzw. die Sendeantenne als ein stromdurchflossener Leiter ausgebildet. Dieser stromdurchflossene Leiter bildet vorzugsweise einen Teil einer elektrischen Schaltung des jeweiligen Verzögerungsgliedes, d.h. das jeweilige Ausgabeelement könnte eine elektrische Verbindungsleitung zwischen einzelnen Komponenten des jeweiligen Verzögerungsgliedes sein. Als Ausgabeelement könnte auch eine Spule vorgesehen sein, die insbesondere abhängig von einem Spulenstrom ein Magnetfeld erzeugt.

Die Ausgabeelemente könnten ausgelegt sein, ein Trägersignal auszugeben, welches durch das Ausgabesignal periodisch moduliert ist. In einer bevorzugten Ausführungsform umfasst das Trägersignal ein elektromagnetisches und insbesondere ein optisches Signal, dessen Intensität mit der Periodizität des Ausgabesignals moduliert wird. Somit umfassen die Ausgabesignale vorzugsweise periodische Intensitätsvariationen eines elektromagnetischen, insbesondere optischen Trägersignals. Für solche Trägersignale ist es besondere leicht möglich, die Frequenz derart zu wählen, dass das Signal auf technologisch einfache weise anisotrop also gerichtet ausgestrahlt werden kann. Damit lassen sich hohe Reichweiten des Signals in einer Ausstrahlrichtung und eine geringe Abstandsabhängigkeit der Signalintensitäten erreichen. Vorzugsweise umfasst zumindest eines der Ausgabeelemente einen Lichtemitter, insbesondere eine LED. Weiter bevorzugt umfasst das.Sensorelement einen Lichtsensor insbesondere eine Photodiode.

In einer weiteren bevorzugten Ausführungsform könnten die Ausgabeelemente auch ausgelegt sein, die Ausgabesignale im wesentlichen isotrop, als mit im wesentlichen gleicher Intensität in mehrere Raumrichtungen, vorzugsweise in alle Raumrichtungen auszugeben. Damit erreicht man eine gute Detektierbarkeit der Siganle aus verschiedenen Richtungen bzw. unter verschiedenen Winkeln. Dies lässt eine besonders zuverlässige Interpolation von Positionen zwischen den Ausgabeelementen zu.

Alternativ oder zusätzliche könnten die Ausgabeelemente auch ausgelegt sein, ein akustisches Ausgabesignal auszugeben und das Sensorelement könnte einen akustischen Sensor umfassen.

Besonders bevorzugt ist das Sensorelement ausgelegt, das Sensorsignal als ein über einen Raumbereich integriertes Signal zu erfassen, wobei der Raumbereich zumindest in einer Richtung einen Durchmesser aufweist, der zwischen dem 0,2-fachen und dem 5-fachen, vorzugsweise zwischen dem 0,4-fachen und dem 2-fachen des Abstandes zwischen der ersten und der zweiten Ausgabeposition liegt. Als Abstand zwischen der ersten und der zweiten Ausgabeposition wird dabei insbesondere der Abstand des Zentrums bzw. des geometrischen Schwerpunkts der ersten bzw. zweiten Ausgabeposition bezeichnet. Vorzugsweise ist liegt die räumliche Dimensionierung des Sensorelement in der Größenordnung der räumlichen Dimensionierung der Verzögerungsglieder bzw. der Ausgabeelemente. Damit ist eine Glättung und insbesondere ein kontinuierlicher Zusammenhang zwischen der Position des Sensorelements und der erfassten Phasenverschiebung des Sensorsignals erreichbar. Dies ermöglicht eine Interpolation und damit eine genauere Positionsbestimmung.

Vorzugsweise weist die Sensoreinrichtung einen Referenzeingang zum Empfangen des periodischen Referenzsignals auf und ist ausgelegt, eine zur Phasendifferenz zwischen dem Sensorsignal und dem Referenzsignal proportionale elektrische Spannung zu erzeugen.

Außerdem wird durch die vorliegende Erfindung ein Verfahren zur Positionsbestimmung bereitgestellt, welche die Verfahrensschritte umfasst:

- Ausgeben zumindest eines ersten periodischen Ausgabesignals an zumindest einer ersten Ausgabeposition;
- Ausgeben zumindest eines zweiten periodischen Ausgabesignals, dessen Phase relativ zum ersten Ausgabesignal um eine Verzögerungsphase verschoben ist, an zumindest einer zweiten, von der ersten verschiedenen Ausgabeposition;
- zumindest teilweises Erfassen zumindest eines der periodischen Ausgabesignale als ein periodisches Sensorsignal mittels eines relativ zu den Ausgabepositionen bewegbaren Sensorelements;
- Ermitteln einer Phasenlage bzw. Phasenverschiebung des periodischen Sensorsignals relativ zu den Ausgabesignalen; und
- Bestimmen einer Position des Sensorelements relativ zu den Ausgabepositionen aus der ermittelten Phasenlage bzw. Phasenverschiebung des Sensorsignals relativ zu den Ausgabesignalen,

wobei die Schritte des Ausgebens des ersten und zweiten periodischen Ausgabesignals die Schritte umfassen:

- Bereitstellen eines periodischen Eingangssignals;
- Erzeugen eines ersten periodischen Verzögerungssignals durch Verzögern des periodischen Eingangssignals um eine erste Verzögerungsphase;
- Erzeugen eines zweiten periodischen Verzögerungssignals durch Verzögern des ersten periodischen Verzögerungssignals um eine zweite Verzögerungsphase, wobei das erste bzw. zweite Ausgabesignal phasengleich mit dem ersten bzw. zweiten Verzögerungssignal ausgegeben wird.

Das periodische Sensorsignal weist dabei dieselbe Periodizität auf wie die Ausgabesignale.

Vorzugsweise umfasst das Ausgeben des ersten und/oder zweiten periodischen Ausgabesignals ein periodisches Variieren und/oder Modulieren eines elektrischen und/oder magnetischen Feldes. Außerdem umfasst das Erfassen des periodischen Sensorsignals vorzugsweise ein Erfassen einer periodischen Variation und/oder Modulation eines elektrischen und/oder magnetischen Feldes an der Position des Sensorelements. Die vorliegende Erfindung bietet vorzugsweise ein Verfahren zur berührungsfreien Positionsbestimmung. Es findet somit vorzugsweise kein direkter mechanischer Kontakt, bzw. keine direkte mechanische Signalübertragung zwischen den Ausgabepositionen und dem Sensorelement statt.

Vorzugsweise umfasst der Schritt des Ermittelns der Phasenlage des periodischen Sensorsignals relativ zu den Ausgabesignalen einen Schritt des Erzeugens einer elektrischen Spannung, die proportional zur Phasenverschiebung des periodischen Sensorsignals relativ zu einem periodischen Referenzsignal ist. Diese elektrische Spannung dient in besonders einfacher Weise als Maß für die Position des Sensorelements.

Vorzugsweise umfasst das Verfahren einen Schritt des Bereitstellens eines periodischen Referenzsignals derart, dass die Phasenverschiebung des periodischen Sensorsignals relativ zum Referenzsignal eine lineare Funktion des Abstands des Sensorelements von einer Referenzposition ist.

In einer bevorzugten Ausführungsform umfasst das Verfahren weiterhin die Schritte:

- Ausgeben zumindest eines dritten periodischen Ausgabesignals an zumindest einer dritten Ausgabeposition;
- Ausgeben zumindest eines vierten periodischen Ausgabesignals, dessen Phase relativ zum dritten Ausgabesignal um eine Verzögerungsphase verschoben ist, an zumindest einer vierten, von der dritten verschiedenen Ausgabeposition;
- zumindest teilweises Erfassen zumindest des dritten und/oder vierten periodischen Ausgabesignals als ein zweites periodisches Sensorsignal mittels des relativ zu den Ausgabepositionen bewegbaren Sensorelements; und
- Ermitteln einer Phasenlage des zweiten periodischen Sensorsignals relativ zum dritten und/oder vierten Ausgabesignal,

wobei das erste und zweite Ausgabesignal eine erste Signalfrequenz und das dritte und vierte Ausgabesignals eine zweite, von der ersten verschiedene Signalfrequenz aufweisen und wobei die Position des Sensorelements relativ zu den Ausgabepositionen aus den ermittelten Phasenlagen beider Sensorsignale relativ zu den jeweiligen Ausgabesignalen bestimmt wird.

In einem weiteren Aspekt stellt die Erfindung insbesondere ein Verfahren zur Positionsbestimmung bereit, welches die Schritte umfasst:

- Ausgeben eines periodischen Ausgabesignals mittels einer relativ zu einer ersten und einer zweiten Sensorposition bewegbaren Ausgabeelements;
- zumindest teilweises Erfassen des periodischen Ausgabesignals an zumindest einer der zumindest zwei Sensorpositionen als zumindest ein erstes und/oder zweites Sensorsignal;
- Erzeugen einer ersten periodischen Messsignalkomponente eines periodischen Messsignals, deren Phase relativ zum ersten Sensorsignal um eine erste Verzögerungsphase verschoben ist;
- Erzeugen einer zweiten periodischen Messsignalkomponente eines periodischen Messsignals, deren Phase relativ zum zweiten Sensorsignal um eine zweite, von der ersten verschiedene Verzögerungsphase verschoben ist;
- Ermitteln einer Phasenlage des periodischen Messsignals relativ zu einem Referenzsignal; und
- Bestimmen einer Position des Ausgabelements relativ zu den Sensorpositionen aus den ermittelten Phasenlage des Messsignals relativ zum Referenzsignal.

Vorzugsweise ist das Referenzsignal relativ zum Ausgabesignal um eine Referenzphase verschoben. Insbesondere könnte das Ausgabesignal als Referenzsignal genutzt werden.

Vorzugsweise wird das erfindungsgemäße Verfahren mit einer erfindungsgemäßen Vorrichtung oder mit einer ihrer bevorzugten Ausführungsformen durchgeführt. Die Erfindung wird nachfolgend mit Bezug auf begleitende Zeichnungen bevorzugter Ausführungsformen beispielhaft beschrieben. Dabei zeigen:

Fig. 1:     ein Verzögerungsnetzwerk und ein Sensorelement gemäß einer ersten bevorzugten Ausführungsform der vorliegenden Erfindung;

Fig. 2A-2C:     Schaltungsdiagramme für Verzögerungsglieder gemäß weiterer bevorzugter Ausführungsformen der vorliegenden Erfindung;

Fig. 3A-3B:     Simulationsergebnisse der Phasenverschiebungen in den Verzögerungsgliedern eines Verzögerungsnetzwerks gemäß einer bevorzugten Ausführungsform von Fig. 1;

Fig. 4A-4D:     schematische Darstellungen zur Veranschaulichung von Ausgabesignalen in Verzögerungsnetzwerken gemäß bevorzugten Ausführungsformen der vorliegenden Erfindung;

Fig. 5:     eine schematische Darstellung zur Veranschaulichung der Phaseninterpolation gemäß einer bevorzugten Ausführungsform der vorliegenden Erfindung;

Fig. 6:     ein Schaltungsdiagramm einer Vorrichtung gemäß einer bevorzugten Ausführungsform der vorliegenden Erfindung;

Fig. 7:     ein Schaltungsdiagramm eines Verzögerungsnetzwerks zur Bestimmung einer Position in x-Richtung gemäß einer bevorzugten Ausführungsform der vorliegenden Erfindung;

Fig. 8:     eine schematische Darstellung der Signalverteilung für das Verzögerungsnetzwerk von Fig. 7;

Fig. 9:     ein Schaltungsdiagramm eines Verzögerungsnetzwerks zur Bestimmung einer Position in z-Richtung gemäß einer bevorzugten Ausführungsform der vorliegenden Erfindung;

Fig. 10:     eine schematische Darstellung zur Veranschaulichung der Kombination zweier Verzögerungsnetzwerke zur Bestimmung einer Position in zwei Dimensionen;

Fig. 11A-11C:     ein Schaltungsdiagramm eines Verzögerungsnetzwerks und einer Sensoreinrichtung gemäß einer weiteren bevorzugten Ausführungsform der vorliegenden Erfindung;

Fig. 12:     ein Schaltungsdiagramm einer Vorrichtung gemäß einer weiteren bevorzugten Ausführungsform der vorliegenden Erfindung;

Fig. 13:      ein Schaltungsdiagramm eines Verzögerungsnetzwerks zur optischen Übertragung der Ausgabesignale gemäß einer weiteren bevorzugten Ausführungsform der vorliegenden Erfindung;

Fig. 14:      eine schematische Darstellung eines Ausgabeelements und eines Verzögerungsnetzwerks einer Vorrichtung gemäß einer weiteren bevorzugten Ausführungsform der vorliegenden Erfindung;

Fig. 15:      ein Schaltungsdiagramm eines beispielhaften Phasendetektors gemäß der bevorzugten Ausführungsform;

Fig. 16A-16C:   eine schematische Darstellung eines Ausgabeelements und eines Verzögerungsnetzwerks gemäß einer weiteren bevorzugten Ausführungsform der vorliegenden Erfindung; und

Fig. 17A-17E:   schematische Darstellungen von Koppelelementen gemäß bevorzugter Ausführungsformen der vorliegenden Erfindung.

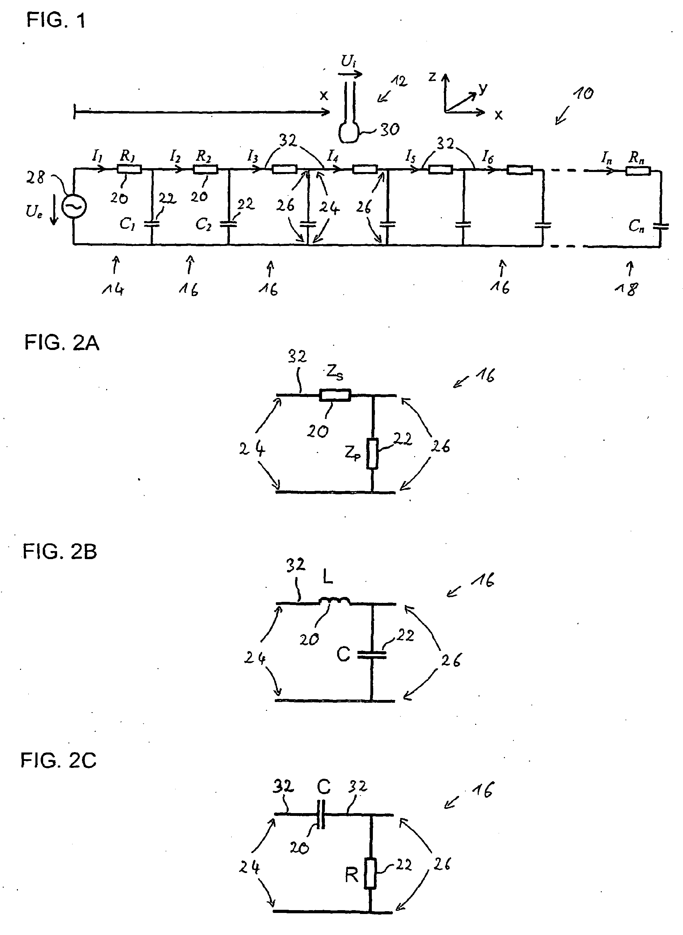

**Fig. 1** zeigt ein Verzögerungsnetzwerk 10 und ein Sensorelement 12, wie es in einer Vorrichtung gemäß einer ersten bevorzugten Ausführungsform der vorliegenden Erfindung zum Einsatz kommen könnte. Das Verzögerungsnetzwerk 10 ist dabei als Verzögerungskette mit einer Vielzahl von aufeinander folgenden bzw. hintereinander geschalteten Verzögerungsgliedern 14, 16, 18 ausgebildet. Jedes der Verzögerungsglieder 14, 16, 18 ist in der gezeigten bevorzugten Ausführungsform von Fig. 1 als Spannungsteilerschaltung ausgebildet, welche jeweils ein serielles Impedanzglied 20 und ein paralleles Impedanzglied umfasst. In der Ausführungsform von Fig. 1 sind die Verzögerungsglieder als RC-Verzögerungsglieder ausgestaltet, wobei die seriellen Impedanzglieder 20 jeweils durch Widerstände $R_v$ und die parallelen Impedanzglieder 22 jeweils durch Kondensatoren bzw. Kapazitäten $C_v$ gebildet werden. Die Verzögerungsglieder sind mit v = 1 ... n durchnumeriert.

Alternative Ausführungsformen von Verzögerungsgliedern 16 sind in Fig. 2A bis 2C dargestellt. Auch diese Verzögerungsglieder 16 sind als Spannungsteilerschaltungen ausgebildet. In **Fig. 2A** wird das serielle Impedanzglied 20 durch eine allgemeine serielle Impedanz $Z_S$ und das parallele Impedanzglied 22 durch eine parallele Impedanz $Z_P$ gebildet. Die elektrischen Impedanzen $Z_S$ und $Z_P$ weisen dabei im allgemeinen jeweils eine Resistanz und eine Reaktanz auf, d.h. die komplexe Darstellung der elektrischen Impedanzen $Z_S$ und $Z_P$ weist im allgemeinen jeweils einen Realteil und einen Imaginärteil auf. In speziellen Ausführungsformen könnte zumindest eines der Impedanzglieder 20, 22 auch keine oder eine vernachlässigbar kleine Resistanz oder Reaktanz aufweisen.

**Fig. 2B** zeigt eine bevorzugte Ausführungsform eines Verzögerungsglieds, das als LC-Verzögerungsglied ausgebildet ist. Dabei wird die serielle Impedanz 20 von einer Induktivität $L$ und die parallele Impedanz von einer Kapazität $C$ gebildet. In dieser Ausführungsform ist die Resistanz der Impedanzglieder 20, 22 vorzugsweise vernachlässigbar. Damit werden elektrische Verluste in Verzögerungsnetzwerken mit solchen Verzögerungsgliedern besonders klein. Insbesondere weist eine Verzögerungskette aus solchen Verzögerungsgliedern eine besonders niedrige Dämpfung, also einen besonders niedrigen Amplitudenabfall auf.

**Fig. 2C** stellt ein besonders einfaches Beispiel eines Verzögerungsglieds 16 dar, das als Hochpass ausgebildet ist. Im Vergleich zu den als Tiefpass ausgebildeten Verzögerungsgliedern von Fig. 1 ist hier die elektrische Implementierung des seriellen 20 und des parallelen Impedanzglieds 22 vertauscht. Das serielle. Impedanzglied ist somit als Kapazität C und das parallele Impedanzglied als ohmscher Widerstand R ausgebildet.

Die dargestellten Verzögerungsglieder 14, 16, 18 weisen jeweils einen Verzögerungssignaleingang 24 zum Empfangen eines Verzögerungseingangssignals und einen Verzögerungssignalausgang 26 zum Ausgeben eines Verzögerungsausgangssignals auf. Das in Fig. 1 dargestellte Verzögerungsnetzwerk 10 ist als Verzögerungskette ausgebildet, in der, abgesehen vom ersten Verzögerungsglied 14, der Verzögerungssignaleingang 24 jedes Verzögerungsglieds 16, 18 mit dem Verzögerungssignalausgang 26 des in der Verzögerungskette unmittelbar vorangehenden Verzögerungsglieds 14, 16 elektrisch verbunden ist. Der Verzögerungssignaleingang des ersten Verzögerungsglieds 14 ist mit einem Signalgenerator 28 verbunden. Der Signalgenerator 28 kann dabei vorzugsweise als Wechselspannungs- oder Wechselstromquelle ausgebildet sein. Der Signalgenerator kann im Verzögerungsnetzwerk integriert sein oder separat bereitgestellt werden. In der gezeigten Ausführungsform ist der Signalgenerator 28 eine Wechselspannungsquelle, die eine Wechselspannung $U_e$ mit einer Signalfrequenz $f$ bereitstellt. Dadurch wird im ersten Verzögerungsglied 14 ein Verzögerungssignalstrom $I_1$ durch das serielle Impedanzglied 20 bewirkt. Der Verzögerungssignalstrom $I_1$ ist insbesondere ein Wechselstrom mit der Signalfrequenz $f$, der im gesamten elektrische Leitungsabschnitt zwischen dem Verzögerungssignaleingang und dem Verzögerungssignalausgang, also auch durch den ohmschen Widerstand $R_1$ fließt. Am Verzögerungssignalausgang steht damit wiederum eine Wechselspannung mit der Signalfrequenz $f$ zur Verfügung, die die nachfolgenden Verzögerungsglieder 16, 18 versorgt und insbesondere in den nachfolgenden Verzögerungsgliedern 16, 18 entsprechende Verzögerungssignalströme $I_2, I_3, ... I_n$ bewirkt. Abhängig von den Impedanzen der einzelnen Verzögerungsglieder sind die Verzögerungssignalströme $I_v$ gegeneinander in ihrer Phase verschoben.

Diese Verzögerungssignalströme $I_v$ erzeugen dabei jeweils ein periodisch wechselndes Magnetfeld $H_v$. Dieses kann mittels einer Induktions- bzw. Sensorspule 30 erfasst werden, welche vom Sensorelement 12 umfasst ist. Das Magnetfeld bewirkt dabei in der Induktionsspule 30 eine Induktionsspannung $U_i$. Das erfasste periodisch wechselnde Magnetfeld und insbesondere dessen Phasenlage relativ zur Phasenlage der Wechselspannung $U_e$ hängt dabei von der Position x des Sensorelements relativ zum Verzögerungsnetzwerk ab, ist also ein Maß für die zu detektierende Position x. Durch Auswertung der Phasenlage der Induktionsspannung $U_i$ relativ zur Wechselspannung $U_e$ kann somit die Position x des Sensorelement ermittelt werden.

In der in Fig. 1 gezeigten Ausführungsform bilden die Stromleitungen der Verzögerungsglieder 14, 16, 18 zwischen dem Verzögerungssignaleingängen 24 und den Verzögerungssignalausgängen 26, in denen insbesondere die seriellen Impedanzglieder 20, also die Widerstände $R_n$ angeordnet sind, jeweils ein Ausgabeelement 32 zum Ausgeben eines periodischen Ausgabesignals, welches im gezeigten Beispiel von dem periodisch wechselnden Magnetfeld gebildet wird. Vorzugsweise sind die Ausgabeelemente 32 entlang einer Richtung x, insbesondere entlang einer Geraden, vorzugsweise in regelmäßigen Abständen, insbesondere äquidistant, angeordnet.

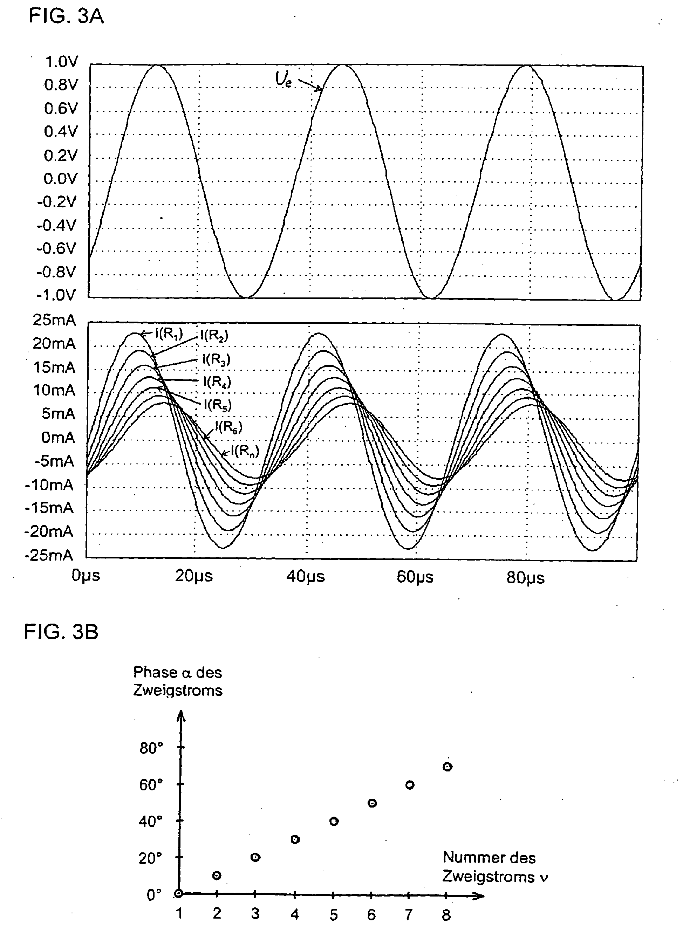

In **Fig. 3A** ist ein Simulationsergebnis für die Verzögerungssignalströme $I_v$ in einem Verzögerungsnetzwerk 10 gemäß der Ausführungsform von Fig. 1 gezeigt. Dabei umfasst das Verzögerungsnetzwerk 10 insbesondere eine Kette von $n = 7$ RC-Verzögerungsgliedern 14, 16, 18. Der Signalgenerator 28 erzeugt ein Wechselspannung $U_e$ mit einer Amplitude von 1V und einer Signalfrequenz von $f = 30$ kHz. Die Widerstände haben Werte von $R_v = 10\,\Omega$ und die Kapazitäten Werte von $C_v = 33$ nF, für $v = 1..\,6$. Lediglich das letzte Verzögerungsglied 18 hat einen Widerstand von $R_n = 33{,}58\,\Omega$ und eine Kapazität von $C_n = 189$ nF. Das letzte Verzögerungsglied 18 dient als Leitungsabschluss und bewirkt bei geeigneter Dimensionierung insbesondere einen linearen Verlauf der Phase, d.h. eine konstante bzw. gleiche Phasenverschiebung zwischen den einzelnen Verzögerungsgliedern.

Die Verzögerungssignalströme $I_v$ in den einzelnen Verzögerungsgliedern $v$ sind jeweils unterschiedlich bezüglich Amplitude und Phase. Im eingeschwungenen Zustand gilt für die Zeitfunktionen jeweils

$$I_v = I_{v0} \sin\!\left(2\pi \cdot f \cdot t - \alpha_v\right)$$

mit der Amplitude $I_{v0}$, der Frequenz $f$ und einer jeweiligen Phase $\alpha_v$.

In Fig. 3A oben ist die Eingangsspannung $U_e$ über eine Zeit von 100 $\mu$s dargestellt. Darunter sind die Verzögerungssignalströme gezeigt. Der Strom im Widerstand $R_1$ soll als Bezugssignal bzw. Referenzsignal dienen und hat die Phase Null.

Die Phasenverschiebung der Verzögerungssignalströme in den einzelnen Verzögerungsgliedern ebenso wie die Dämpfung der Amplituden von Verzögerungsglied zu Verzögerungsglied ist deutlich zu sehen. In der dargestellten bevorzugten Ausführungsform ist die gesamte Phasenverschiebung eine lineare Funktion der Zweignummer also der Nummer $v$ des Verzögerungsgliedes und beträgt etwa 10,1° pro Verzögerungsglied. Wie groß die Phasen- und Amplitudenvariationen sind, hängt von der Signalfrequenz $f$, von den Impedanzen, insbesondere den Widerstands- und Kapazitätswerten der Verzögerungsglieder und von der Impedanz des Leitungsabschlusses ab. Diese Parameter lassen sich für die gewünschte Anwendung in sehr weiten Grenzen variieren. Wie in Fig. 3B gezeigt ist, erreicht man durch die im vorliegenden Beispiel gewählten Parameter einen linearen Zusammenhang zwischen Nummer $v$ der Verzögerungsglieds und der Phasenverschiebung des zugehörigen Verzögerungssignalstroms relativ zum ersten Verzögerungssignalstrom.

Im Folgenden wird gezeigt, wie durch Auslegung der Elemente der Verzögerungskette eine exakte lineare Phasenverschiebung der Ströme in Abhängigkeit von der Nummer des Verzögerungsglieds, also die gleiche Phasenverschiebung für alle Verzögerungsglieder erreicht werden kann. Dazu wird eine Verzögerungskette mit n = 7 RC-Verzögerungsgliedern betrachtet, wie sie beispielsweise in Fig. 1 dargestellt ist. Das letzte Verzögerungsglied mit $R_n$ und $C_n$ dient als Leitungsabschluss. Die anderen Leitungsglieder bestehen alle aus den gleichen Elementen $R_v = R$ und $C_v = C$. für $v$=1..6.

Der Zusammenhang zwischen dem komplexen Strom $I_5$ und dem komplexen Strom $I_6$ soll über eine komplexe Konstante k beschrieben werden als

$$k = \frac{I_6}{I_5} = a \cdot e^{j(-\Delta\alpha)}$$

Dabei beschreibt $a$ den Amplitudenabfall und $\Delta\alpha$ die Phasenverschiebung zwischen den Stromsignalen $I_5$ und

$I_6$. Vorzugsweise gilt der gleiche Zusammenhang auch für die Stromsignale $I_5$ und $I_4$ entsprechend

$$k = \frac{I_5}{I_4} = a \cdot e^{j(-\Delta\alpha)}$$

Insbesondere gilt zwischen $I_5$ und $I_4$ vorzugsweise sowohl die gleiche Amplitudenbeziehung als auch die gleiche Phasenbeziehung wie zwischen $I_6$ und $I_5$. Besonders bevorzugt gelten die gleichen Beziehungen zwischen den Stromsignalen in allen direkt aufeinander folgenden Verzögerungsgliedern einer bevorzugten Verzögerungskette:

$$k = \frac{I_{v+1}}{I_v} = a \cdot e^{j(-\Delta\alpha)}$$

Diese Zwangsbedingungen lassen sich durch einen an die RC-Leitung angepassten Leitungsabschluss mit $R_n$ und $C_n$ erreichen.

Es wird $Z_C = \dfrac{1}{j\omega C}$ und $Z = R$ gesetzt. Außerdem gilt $Z_n = R_n + \dfrac{1}{j\omega C_n}$.

Die Netzwerkanalyse der letzten beiden Verzögerungsglieder ergibt dann die Gleichungen

$$\frac{I_6}{I_5} = \frac{Z_C}{Z_C + Z_n} = k \qquad \text{und} \qquad \frac{I_5}{I_4} = \frac{Z_C}{Z_C + Z + \dfrac{Z_C \cdot Z_n}{Z_C + Z_n}} = k$$

Aus diesen beiden Gleichungen wird $Z_C$ eliminiert. Daraus erhält man den einfachen Zusammenhang

$$\frac{Z}{Z_C} = \frac{1}{k} + k - 2$$

Einsetzen der konkreten Netzwerkgrößen ergibt die Gleichung

$$\frac{R}{\dfrac{1}{j\omega C}} = \frac{1}{a \cdot e^{j(-\Delta\alpha)}} + a \cdot e^{j(-\Delta\alpha)} - 2$$

woraus man folgende Ergebnisse für $a$ und $C$ erhält:

$$a = \frac{1}{\cos(\Delta\alpha)} - \sqrt{\frac{1}{\cos^2(\Delta\alpha)} - 1} \qquad \text{und} \qquad C = \frac{1}{2\pi f R} \cdot \left(\frac{1}{a} - a\right) \cdot \sin(\Delta\alpha)$$

Offensichtlich ergibt sich bei vorgegebenem $\Delta\alpha$ unmittelbar die Dämpfung $a$. Weiterhin lässt sich dann bei Vorgabe von $R$ und $f$ sofort die Kapazität $C$ berechnen. Nach obigem Beispiel folgt bei Vorgabe von $\Delta\alpha = 10{,}1°$, $R = 10\Omega$ und $f = 30$kHz für die Dämpfung der Wert $a = 0{,}8379$ und schließlich für die Verzögerungskapazität $C = 33nF$.

Zur Berechnung des Leitungsabschlusses formt man zunächst

$$\frac{I_6}{I_s} = \frac{Z_C}{Z_C + Z_n} = k \qquad \text{um in} \qquad \frac{Z_n}{Z_C} = \frac{1}{k} - 1$$

Setzt man in diese Gleichung die Ausdrücke

$$Z_n = R_n + \frac{1}{j\omega C_n} \qquad , \qquad k = a \cdot e^{j(-\Delta\alpha)} \quad \text{und} \quad Z_C = \frac{1}{j\omega C}$$

ein, so ergibt sich die Gleichung

$$\frac{R_n + \dfrac{1}{j\omega C}}{\dfrac{1}{j\omega C}} = \frac{1}{a \cdot e^{j(-\Delta\alpha)}} - 1$$

Die Lösung dieser Gleichung bringt die beiden Formeln

$$R_n = \frac{1}{2 \cdot \pi \cdot f \cdot C} \cdot \frac{1}{a} \cdot \sin(\Delta\alpha) \quad \text{und} \quad C_n = \frac{C}{\dfrac{1}{a} \cdot \cos(\Delta\alpha)}$$

für die Dimensionierung des Leitungsabschlusses. Für das oblige Beispiel findet man

$$R_n = 33{,}58\,\Omega \quad \text{und} \quad C_n = 189\,nF$$

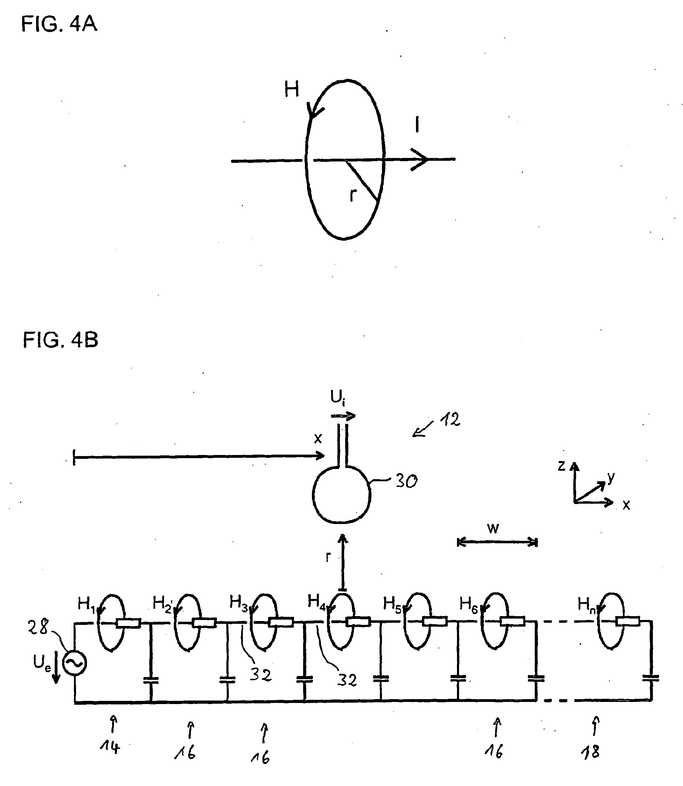

In Fig. 4A bis 4D ist die Erzeugung und Erfassung der Ausgabesignale, also der Magnetfelder für ein Verzögerungsnetzwerk 10 gemäß der bevorzugten Ausführungsform von Fig. 1 veranschaulicht. Wie in **Fig. 4A** dargestellt, erzeugt ein Verzögerungssignalstrom $I$ ein ringförmiges Magnetfeld $H$. Dabei gilt mit kleinem Radius $r$ in der Nähe des Leiterelements für die Feldstärke $H$ die Formel

$$H = \frac{I}{2 \cdot \pi \cdot r}$$

Die Feldstärke $H$ nimmt demnach mit dem Radius $r$ ab. Die Einzelströme $I_v$ in den Widerstandszweigen erzeugen die jeweils in der y-z-Ebene liegenden ringförmigen magnetischen Einzelfeldstärken $H_v$, wie aus **Fig. 4B** zu erkennen ist. Auch die einzelnen magnetischen Feldstärken $H_v$ sind dann entsprechende Funktionen der Zeit mit gleicher Frequenz

*f* und Phase $\alpha_v$ wie bei den entsprechenden Zweigströmen bzw. Verzögerungssignalströmen $I_v$. Es gilt

$$H_\nu = H_{\nu 0} \cdot \sin\left(2 \cdot \pi \cdot f \cdot t - \alpha_\nu\right)$$

Die Feldamplituden

$$H_{\nu 0} = \frac{I_{\nu 0}}{2 \cdot \pi \cdot r}$$

nehmen mit dem Radius *r* ab. Diese beiden Formeln gelten exakt nur für lange Leiter, oder, was gleichbedeutend ist, nur in unmittelbarer Nähe eines einzelnen Leiterelements. In der Nähe bzw. im Bereich des benachbarten Verzögerungsgliedes gilt die nächste Amplitude und die nächste Phase.

In unmittelbarer Nähe der Widerstandszweige, also der Ausgabeelemente 32 sind daher im Feld Phasensprünge von Widerstandszweig zu Widerstandszweig, also von Verzögerungsglied zu Verzögerungsglied zu erwarten. Bei geeigneter Abmessung des Sensorelements 12 ist es möglich diese Phasensprünge im detektierten Sensorsignal aufzuweichen, also einen kontinuierlichen Übergang zu erreichen. Dazu wird die Abmessung des Sensorelements 12, und insbesondere der Durchmesser der Induktionsspule 30 in der Größenordnung des Abstandes w bzw. der räumlichen Periode w zwischen den Verzögerungsgliedern gewählt. Außerdem werden die Phasensprünge auch mit steigender Entfernung *r* zwischen Sensorelement 12 und Verzögerungsnetzwerk 10 aufgeweicht. Dieser Effekt tritt insbesondere dann ein, wenn der Abstand *r* in der Größenordnung des Abstandes *w* bzw. der räumlichen Periode *w* zwischen den Verzögerungsgliedern liegt. Bei einer derart bevorzugten Ausgestaltung der erfindungsgemäßen Vorrichtung zeigt die Phase des erfassten Magnetfeldsignals bzw. Sensorsignals einen kontinuierlichen und nahezu linearen Verlauf als Funktion des Ortes x der Induktionsspule 30.

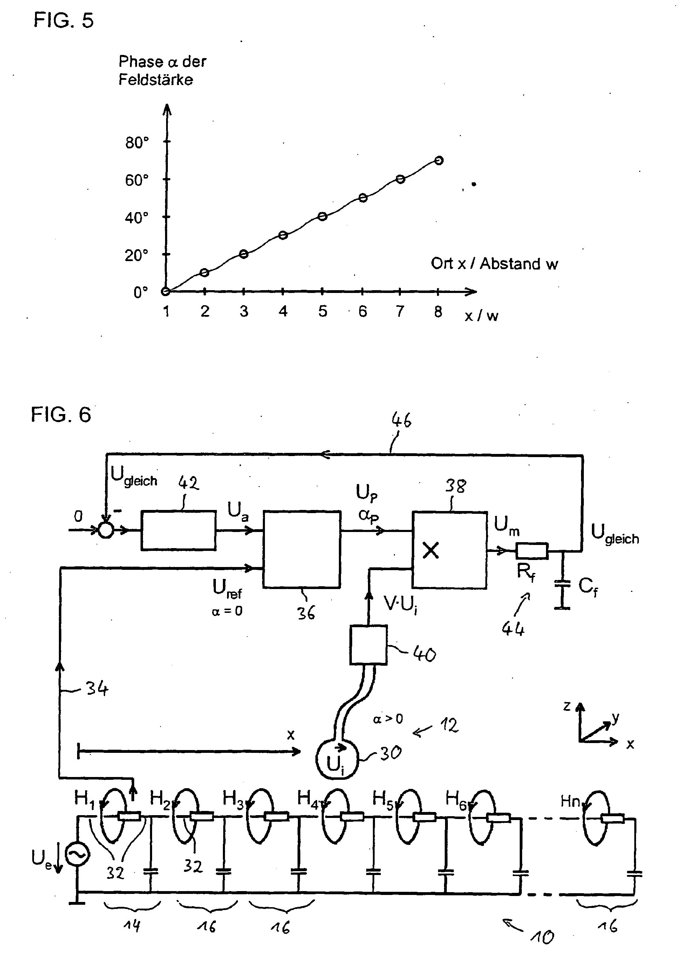

In **Fig. 5** ist die Phase der Feldstärke als Funktion des Ortes *x* der Induktionsspule, bezogen auf den Elementabstand w, also den Abstand bzw. die räumliche Periode w der Verzögerungsglieder 14, 16, 18, insbesondere der Ausgabeelemente 32, beispielhaft dargestellt. Damit ist es möglich, nicht nur diskrete Positionen des Sensorelements nahe der einzelnen Verzögerungsglieder bzw. nahe der einzelnen Ausgabeelemente zu bestimmen. Es ist vorzugsweise möglich, durch Interpolation der detektierten Phasenverschiebung sämtliche Positionen zwischen diesen diskreten Positionen mit hoher Genauigkeit zu bestimmen. Die kontinuierliche Phase der Feldstärke wird im folgenden mit $\alpha$ bezeichnet. Es gilt daher

$$H = H_0 \cdot \sin\left(2 \cdot \pi \cdot f \cdot t - \alpha\right)$$

Es sei betont, dass die Amplitude $H_0$ und ihre.Abhängigkeit von der Entfernung *r* zwischen den Ausgabeelementen 32 und der Induktionsspule 30 in den folgenden Ausführungen keine Rolle mehr spielt.

In Richtung des Radius r ändert sich die Amplitude $H_0$ des Magnetfeldes zwar sehr deutlich. Die Phase des Magnetfeldes ändert sich in der Richtung des Radius *r* jedoch nicht oder höchstens nur sehr geringfügig. Die Phase ändert ihren Wert vorzugsweise nur als Funktion des Weges *x*. Und bei nicht zu kleiner Induktionsspule ist eine Mittelung über die Bereiche von Phasensprüngen möglich, wodurch der Phasenverlauf eine kontinuierliche und lineare Funktion des Weges *x* annimmt. Die weitgehende Unempfindlichkeit der Sensorfunktion bei Abstandsänderungen der Induktionsspule zur Widerstandskette ist ein wesentlicher Vorteil im Vergleich zu herkömmlichen Wegsensorprinzipien. In Abhängigkeit von den Parametern des RC-Netzwerks können leicht Gesamtphasenverschiebungen von über 90 ° realisiert werden. Im Sinne der Erfindung soll die Phasenlage $\alpha$ der Magnetfelder die Ortsinformation abbilden. Vorzugsweise ist die Induktionsspule 30 der bewegte Teil eines Wegsensors. Alternativ könnte auch die Induktionsspule ortsfest angeordnet und das Verzögerungsnetzwerk 10 könnte relativ dazu beweglich sein.

Das magnetische Wechselfeld des jeweiligen Zweigstroms induziert in der Induktionsspule eine Spannung mit entsprechender Phasenverschiebung $\alpha$. Über die Auswertung dieser Phaseninformation ist zu erkennen, an welchem Ort *x* sich die Spule aktuell befindet.

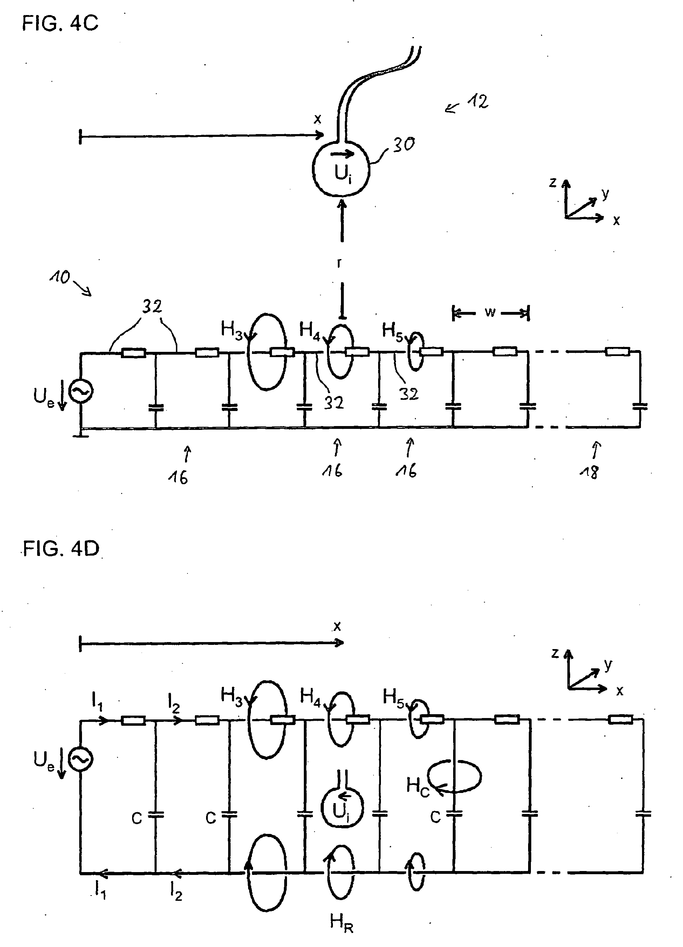

Das Wechselmagnetfeld wird durch die Induktionsspule 30 vorzugsweise kontaktlos erfasst. Die Induktionsspule liegt dabei vorzugsweise in der *x-z*-Ebene. Für die Induktionsspannung mit der in **Fig. 4C** dargestellten Pfeilrichtung gilt

$$U_i = -N \frac{d[B(t) \cdot A]}{dt} = -N \frac{d[\mu_0 H(t) \cdot A]}{dt}$$

wobei $N$ die Windungszahl, $A$ die Fläche der Spule, $\mu_0$ die magnetische Feldkonstante und $H(t)$ die zu detektierende vorzugsweise sinusförmige Feldstärke ist. Das sinusförmige Wechselmagnetfeld

$$H(t) = H_0 \cdot \sin(2 \cdot \pi \cdot f \cdot t - \alpha)$$

ergibt demnach die cosinusförmige Wechselspannung

$$U_i = -N \cdot \mu_0 \cdot A \cdot 2 \cdot \pi \cdot f \cdot H_0 \cdot \cos(2 \cdot \pi \cdot f \cdot t - \alpha)$$

Mit der Feldstärkenamplitude

$$H_0 = \frac{I_0}{2 \cdot \pi \cdot r}$$

folgt

$$U_i = -\frac{N \cdot \mu_0 \cdot A \cdot f \cdot I_0}{r} \cdot \cos(2 \cdot \pi \cdot f \cdot t - \alpha)$$

Fasst man hier die Amplitude gemäß

$$U_{i0} = -\frac{N \cdot \mu_0 \cdot A \cdot f \cdot I_0}{r}$$

zusammen, so ergibt sich

$$U_i = U_{i0} \cdot \cos(2 \cdot \pi \cdot f \cdot t - \alpha)$$

Insbesondere in weiter Entfernung $r$ vom Leiterelement liegen die Spannungsamplituden im Bereich von wenigen mV und darunter. Vorzugsweise wird die Induktionsspannung $U_i$ elektronisch um einen Faktor $V$ verstärkt. Es gilt dann $U = V \cdot U_i$. Vorzugsweise wird aber nicht die Amplitude $U_{i0}$, sondern lediglich die Phasenlage $\alpha$ ausgewertet. Die Phasenlage variiert über der Kette der Widerstände und ist eine analoge, kontinuierliche und weitgehend lineare Funktion des zu detektierenden Ortes $x$ der Spule 30. Es gilt $\alpha = \alpha(x)$.

Wenn die Spule einen sehr geringen Abstand $r$ zu den Widerstandszweigen hat, gibt es eine plötzliche Änderung der Phase im Punkt der Stromabzweigung in die Kapazität. Um eine Stufung im Ausgangssignal zu vermeiden, wird vorzugsweise der Spulendurchmesser nicht kleiner als die geometrische Ausdehnung $w$ des einzelnen Tiefpasselements gewählt.

In Fig. 4C sind die Verhältnisse bei großen vertikalen Abständen, vorzugsweise $r > 2w$ der Spule 30 vom Ausgabeelement 32 gezeigt. Die geeignete Regelelektronik reagiert auch bei diesen großen Abständen *r*. Bei solchen Abständen haben aber auch die Nachbarfelder $H_3$ und $H_5$ Einfluss auf die Induktionsspannung $U_i$. Falls die Nachbarfelder $H_3$ und $H_5$ gleiche Größe hätten, so würden sich die Einzelfehler bezüglich der Phase ausgleichen. Das Feld $H_5$ ist aber kleiner als das Feld $H_3$, weil entlang des passiven RC-Netzwerks Verluste auftreten. Daher wird das Gesamtergebnis einen Weg vortäuschen, der leicht in Richtung des Ergebnisses des größeren $H_3$ verschoben ist. Messungen haben gezeigt, dass hierbei insgesamt aber keine großen Phasenfehler auftreten und die Ergebnisse auch bei *r* = 5w noch sehr gut sind. Eine ähnliche Situation ergibt sich an den Rändern der RC-Verzögerungskette, weil ein Ausgleich von Seitenfeldeinflüssen nicht stattfindet. Hieraus resultieren unter Umständen geringfügige Nichtlinearitäten am Anfang und Ende der Kennlinie.

Wichtig ist die Beachtung der Felder $H_R$ durch die Rückführung der Ströme auf der unteren gemeinsamen Leitung, wie in **Fig. 4D** gezeigt. Diese Ströme und Felder sind gleichwertig mit den oberen Strömen und Feldern. Man kann die Induktionsspule also genauso gut in der Nähe dieses Rückleiters anbringen. Die Induktionsspule lässt sich vorteilhaft auch direkt zwischen Hin- und Rückleiter positionieren. Dann wirken beide Feldkomponenten und die Induktionsspannung wird größer. Die Einflüsse der kleinen Ströme in den Kapazitäten mit den Nahfeldern $H_C$ lassen sich durch eine relativ große Induktionsspule herausmitteln (Fig. 4D).

**Fig. 6** zeigt eine Schaltungsanordnung einer Vorrichtung gemäß einer bevorzugten Ausführungsform der vorliegenden Erfindung. Insbesondere ist darin eine bevorzugte Ausgestaltung einer Sensoreinrichtung dargestellt, dessen Funktionsweise im folgenden erläutert wird. Der Strom $I_1$ im ersten Widerstand $R_1$ soll mit der Phase Null als Bezug dienen. Es gilt

$$I_1 = I_{10} \cdot \sin(2 \cdot \pi \cdot f \cdot t)$$

Der Spannungsabfall an diesem Widerstand

$$U_{ref} = R \cdot I_1 = R \cdot I_{10} \cdot \sin(2 \cdot \pi \cdot f \cdot t) = U_{r0} \cdot \sin(2 \cdot \pi \cdot f \cdot t)$$

dient Vorzugsweise als Referenzsignal 34. Mit Hilfe eines elektronischen Phasenschiebers 36 gewinnt man daraus ein phasenverschobenes Signal $U_P$ zu

$$U_P = U_{r0} \cdot \sin(2 \cdot \pi \cdot f \cdot t - \alpha_P)$$

Die Größe der Phasenverschiebung $\alpha_P$ ist über eine Spannung $U_a$ mit Hilfe eines Steuerfaktors $k_P$ einstellbar. Es soll gelten

$$\alpha_P = k_P \cdot U_a$$

Die elektronische Auswertung der Phase gelingt über eine Multiplikation der Induktionsspannung mit dem phasenverschobenen Signal $U_P$ in einem Multiplizierer 38. Für den elektronischen Multiplizierer 38 soll gelten

$$U_m = m \cdot V \cdot U_P \cdot U_i$$

wobei *m* lediglich eine Umsetzungskonstante des Multiplizierers und *V* die Verstärkung eines Verstärkers 40 ist. Mit

$$U_i = U_{i0} \cdot \cos(2 \cdot \pi \cdot f \cdot t - \alpha)$$

folgt

$$U_m = m \cdot V \cdot U_{r0} \cdot \sin(2 \cdot \pi \cdot f \cdot t - \alpha_P) \cdot U_{i0} \cdot \cos(2 \cdot \pi \cdot f \cdot t - \alpha)$$

oder mit $U_{m0} = m \cdot V \cdot U_{r0} \cdot U_{i0}$ zusammengefasst

$$U_m = U_{m0} \cdot \sin(2 \cdot \pi \cdot f \cdot t - \alpha_P) \cdot \cos(2 \cdot \pi \cdot f \cdot t - \alpha)$$

Mit Hilfe der mathematischen Beziehung

$$\sin(A) \cdot \cos(B) = \frac{1}{2}[\sin(A - B) + \sin(A + B)]$$

erreicht man eine Umformung hin zu

$$U_m = \frac{1}{2}U_{m0} \cdot \sin(-\alpha_P + \alpha) + \frac{1}{2}U_{m0} \cdot \sin(4 \cdot \pi \cdot f \cdot t - \alpha_P - \alpha)$$

Der zweite Summand ist ein zeitliches Wechselsignal mit doppelter Frequenz, der erste Summand ist ein von der Zeit unabhängiges Gleichsignal

$$U_{gleich} = \frac{1}{2}U_{m0} \cdot \sin(-\alpha_P + \alpha)$$

Die Phase $\alpha_P$ des sinusförmigen Vergleichssignals wird nun mit Hilfe einer Regelschaltung solange verstellt, bis das Gleichsignal Null ist. Das ist bei $\alpha_P = \alpha$ der Fall. Die Regelschaltung muss also lediglich den Gleichanteil des Multiplikationsergebnisses zu Null regeln. Der Sollwert des in Fig. 6 dargestellten Regelkreises ist somit Null. Der Integralregler 42 liefert eine Ausgangsspannung $U_a$. Diese Spannung bewirkt mit Hilfe des Phasenschiebers 36 die Phasenverschiebung der Referenz-Sinusspannung $U_{ref}$ hin zur phasenverschobenen Sinusspannung $U_P$ mit der Phase $\alpha_P$. Diese Sinusspannung $U_P$ wird im Multiplizierer 38 mit der verstärkten Induktionsspannung $U_i$ multipliziert. Ein Tiefpassfilter unterdrückt die Wechselanteile im Multiplikationsergebnis $U_m$ und lässt den Gleichanteil $U_{gleich}$ passieren, der dann über ein Rückkopplungsleitung 46 auf den Integralregler 42 wirkt. Im ausgeregelten Zustand hat $U_{gleich}$ den Wert Null und der Integralregler 42 bleibt bei seinem aktuellen Wert $U_a$ stehen.

Die Spannung $U_a$ ist gleichzeitig die Steuerspannung des Phasenschiebers 36, der sich dann auch nicht mehr weiter verändert. Dieses aktuelle $U_a$ des Phasenschiebers 36 ist nun ein Maß für die Phase der Induktionsspannung $U_i$ und stellt letztlich ein Ausgangssignal des hier beschriebenen Wegsensors dar. Die Spannung $U_a$ ist eine direkte Funktion des zu detektierenden Weges $x$. Zwischen der Phase $\alpha$ und dem Weg $x$ besteht nach korrekter Dimensionierung der Verzögerungskette die lineare Beziehung

$$\alpha = \frac{\alpha_{max}}{x_{max}} \cdot x$$

Dabei ist $\alpha_{max}$ die maximale Phasenverschiebung, welche in der Verzögerungskette beim maximalen Weg $x_{max}$ erreicht wird. Für den Phasenschieber 36 gilt

$$\alpha_P = k_P \cdot U_a$$

mit

$$k_P = \frac{\alpha_{max}}{U_{a,max}}$$

Im ausgeregelten Zustand ergibt sich $\alpha_P = \alpha$. Damit ist

$$\frac{\alpha_{max}}{x_{max}} \cdot x = \frac{\alpha_{max}}{U_{a,max}} \cdot U_a$$

und man findet für den Weg $x$ das Endergebnis

$$x = \frac{x_{max}}{U_{a,max}} \cdot U_a$$

Der Phasenregelkreis arbeitet auch noch bei sehr kleinen Induktionsspannungen $U_i$. Der Gleichanteil $U_{gleich}$ des Multiplikationsergebnisses entsteht immer nur dann, wenn in der Induktionsspannung ein Signalanteil exakt mit der Frequenz $f$ vorhanden ist. Rausch- und Störsignale, die diese Frequenz nicht haben, bewirken keine Gleichspannung und so auch keine Bewegung des Integralreglers. Dagegen bewirken aber dennoch auch sehr kleine Induktionsspannungen mit der richtigen Frequenz $f$ einen kleinen Gleichanteil nach der Multiplikation und nach einiger Zeit der Aufintegration im Integralregler 42 die richtige Spannung am Ausgang des Reglers 42, welche ja gleichzeitig die Sensorausgangsspannung $U_a$ darstellt. Daraus folgt nun, dass die Phasendetektion auch noch bei großen Abständen von den stromführenden Tiefpasselementen funktioniert.

Als Referenzsignal hat die Spannung $U_{ref}$ die Phase Null. Das phasenverschobene Signal $U_P$ hat die Phase $\alpha$, welche direkt mit dem Weg $x$ in Zusammenhang steht. Sowohl $U_{ref}$ als auch $U_P$ lassen sich in digitale Rechtecksignale umwandeln. Die digitale Äquivalenzverknüpfung dieser beiden Rechtecksignale mit anschließender zeitlicher Mittelwertbildung ist vorzugsweise eine lineare Funktion der Phase und damit ebenfalls als Ausgangssignal nutzbar.

Bei Anordnung der Verzögerungsglieder 14, 16, 18 und/oder der Ausgabeelemente 32 auf einer gekrümmten, insbesondere kreisförmigen Bahn entsteht ein Winkelsensor.

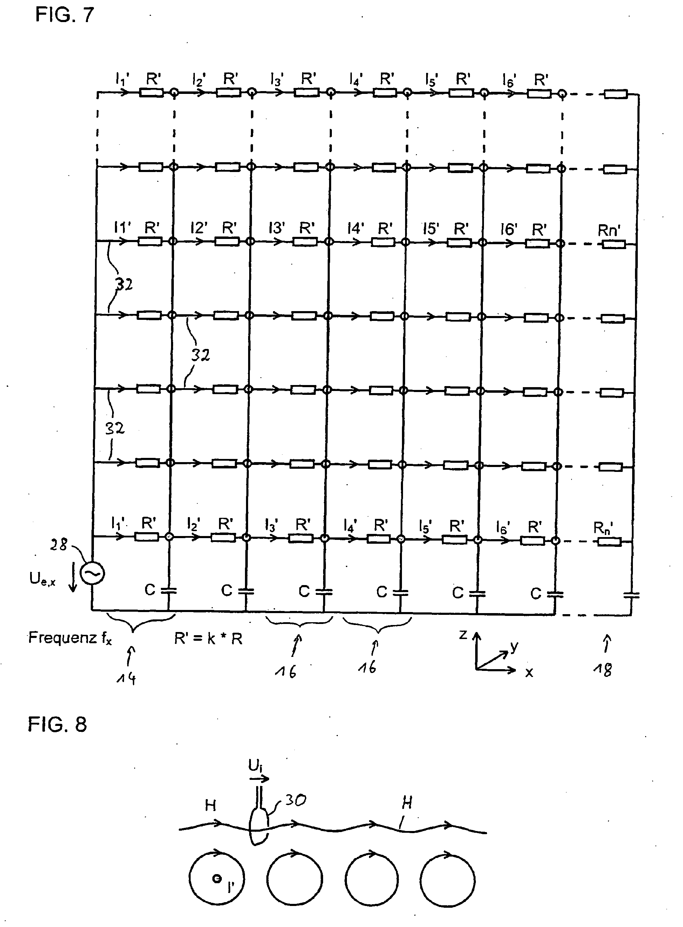

Beim bisher vorgestellten induktiven Wegsensor ist die Weginformation in der Phase der Wechselströme durch die Widerstände und den damit verbundenen ringförmigen Magnetfeldern enthalten. Mit Hilfe des Korrelationsverfahrens ist die Phase erfindungsgemäß auch noch in relativ großem Abstand von den Widerständen detektierbar. Obwohl die Phase weitgehend erhalten bleibt, nimmt die Amplitude der Magnetfelder dennoch mit $1/r$ ab. Dieser nichtlineare Amplitudenabfall lässt sich dadurch vermeiden, dass die felderzeugenden Ströme gleichmäßig in $z$-Richtung verteilt werden. Dieses ist wiederum dadurch zu erreichen, dass man einen stromführenden Widerstand durch die Parallelschaltung von $k$ einzelnen Widerständen ersetzt. Ein entsprechendes Schaltungsdiagramm ist in **Fig. 7** dargestellt.

Der Gesamtwiderstandswert soll sich durch die Parallelschaltung nicht verändern. Dann hat ein Einzelstrom nur noch den $k$-ten Teil des ursprünglichen Stromwertes. Die Verzögerungszeiten des Netzwerkes ändern sich durch die Stromaufteilung jedoch nicht. Daraus folgt dann, dass die Phasen der Ströme und die damit verbundenen Phasen der Magnetfelder in $x$-Richtung unverändert bleiben. Durch die Maßnahme der Parallelschaltung erreicht man eine gleichmäßige Amplitudenverteilung des Feldes in $z$-Richtung. Die Phasenvariation in x-Richtung ist jetzt im gesamten z-Bereich detektierbar mit gleichbleibenden Amplitude der Induktionsspannung $U_i$. Wird durch diese Parallelschaltung der Gesamtwiderstandswert im Vergleich zum Einzelwiderstandswert gemäß Fig. 1 nicht verändert, so hat der Strom $I'$

nur noch den k-ten Teil des ursprünglichen Stromwertes $I$. Die Einzelwirkung der gleichen Einzelströme $I'$ erzeugt die gleichmäßige Feldstärke $H$ oberhalb der Leiterebene, wie in **Fig. 8** dargestellt. Die Induktionsspule wird vorzugsweise senkrecht dazu angeordnet. Die jeweils parallelen Widerstände können als diskrete Bauelemente ausgeführt sein. Es ist aber auch möglich, eine gleichmäßige Stromverteilung über eine in $z$-Richtung ausgedehnte und in $x$-Richtung kurze kontinuierliche Leiterfläche zu realisieren. Der Strom fließt dann im Sinne eines Strömungsfeldes.

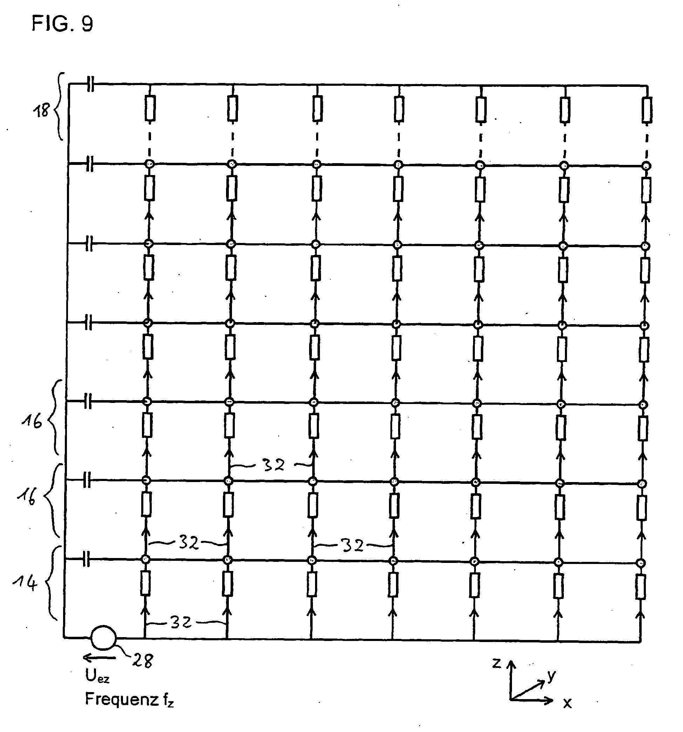

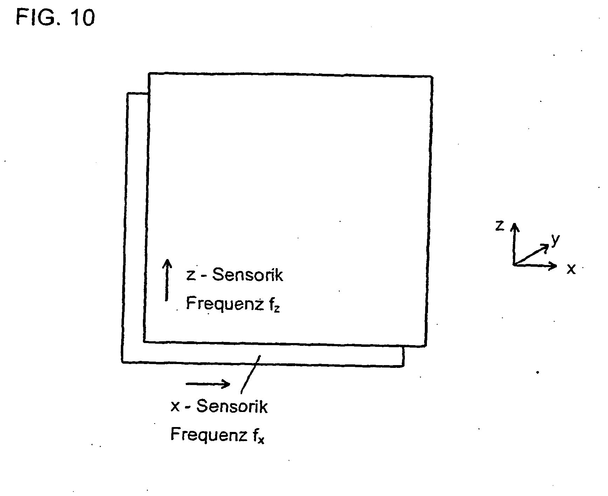

Dreht man das in Fig. 7 dargestellte Verzögerungsnetzwerk 10 um 90°, so lässt sich eine Wegsensorik in $z$-Richtung erreichen, was in **Fig. 9** demonstriert ist. Die gleichmäßige Amplitudenverteilung der felderzeugenden Ströme erfolgt hier in $x$-Richtung. Eine Kombination der beiden flächigen Einzelwegsensoren aus den Fig. 7 und 9 ergibt einen zweidimensionalen Wegsensor bzw. Positionssensor zur Detektion einer Position in zwei Dimensionen, insbesondere in der $x$-$z$-Ebene, wie in **Fig.10** dargestellt. Die flächigen Einzelwegsensoren sind lediglich geometrisch übereinander gelegt. Die Einzelsensoren werden mit den zwei unterschiedlichen Spannungsquellen $U_{e,x}$ und $U_{e,z}$ bei den unterschiedlichen Signalfrequenzen $f_x$ und $f_z$ betrieben. Die Phasenregelkreise arbeiten unabhängig voneinander.

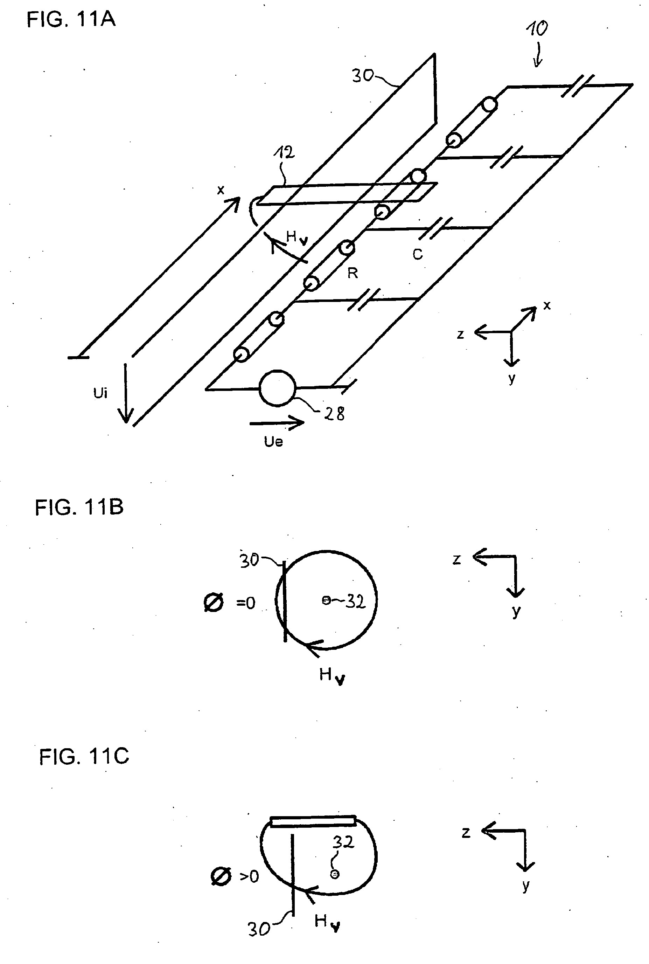

In einer anderen bevorzugten Ausführungsform, wie sie in **Fig. 11A** dargestellt ist, wird das Sensorelement 12 von einem magnetischen Leiter, insbesondere von einem magnetisch leitenden Blechstreifen als Koppelelement gebildet. Dieser magnetische Leiter umfasst dabei vorzugsweise Material mit hoher magnetischer Suszeptibilität, insbesondere ferromagnetisches Material. Damit wird lokal die magnetische Flussdichte bzw. die magnetische Feldstärke $H_n$ beeinflusst bzw. verändert. Besonders bevorzugt wird damit lokal die magnetische Feldstärke erhöht oder insbesondere eine Veränderung der Stärke und/oder Symmetrie des Feldes derart erreicht, dass erst dadurch ein Feld bzw. Signal für das Sensorelement 12 erfassbar wird. Es ist aber auch denkbar, eine lokale Abschirmung bzw. Abschwächung des Magnetfeldes zu bewirken. Die Induktionsspule 30 ist dabei als langgestreckte Spule ausgestaltet, deren Längsrichtung vorzugsweise im wesentlichen entlang der Längsrichtung bzw. parallel zum Verzögerungsnetzwerk bzw. zur Verzögerungskette verläuft. Es ist dabei nicht erforderlich, dass die Induktionsspule 30 relativ zum Verzögerungsnetzwerk bewegbar ist. Vorzugsweise ist lediglich das als magnetischer Leiter ausgestaltete Sensorelement 12 relativ zum Verzögerungsnetzwerk 10 bewegbar.

Abhängig von der Position des Sensorelements wird somit das magnetische Feld zumindest eines Verzögerungsglieds derart beeinflusst, dass dies in der Induktionsspule erfassbar ist. Eine besonders bevorzugte Ausführungsform für die räumliche Anordnung von Verzögerungsnetzwerk 10, Sensorelement 12 und Induktionsspule 30 ist in Fig. 11B bzw. Fig. 11C dargestellt, die die Feldeinkopplung in der z-y-Ebene zeigen. In **Fig. 11B** ist ein Ort an der Verzögerungskette dargestellt, wo der Blechstreifen nicht wirkt. Die vom Leiter bzw. dem Senderelement kommenden Feldlinien erzeugen integral keinen Fluss $\Phi$ in der Induktionsspule und haben demnach keine Auswirkung auf die Induktionsspannung. Demnach ist in einem Bereich, in dem sich das Sensorelement 12 nicht befindet, das magnetische Feld derart symmetrisch zur Induktionsspule, dass diese keinen magnetischen Fluss und damit keine Induktionsspannung detektiert.

Wie in **Fig. 11C** dargestellt, beeinflusst das Sensorelement 12 das Magnetfeld und insbesondere dessen Stärke und/oder dessen Symmetrie lokal derart, dass dadurch ein magnetischer Fluss $\Phi$ und somit eine Induktionsspannung in der Induktionsspule erfasst wird. Die Phase der Induktionsspannung hängt dabei von der Position des Sensorelements 12 ab. Der Blechstreifen leitet den magnetischen Fluss $\Phi$ durch die Induktionspule hindurch. Durch diesen Fluss wird in der Induktionsspule eine Induktionsspannunt $U_i$ induziert. Eine Wirkung auf die Induktionsspannung entsteht nur an der Stelle x durch die Einkopplung genau an dieser Stelle. Die Phase $\alpha$ der Induktionsspannung steht nach den obigen Ausführungen mit dem Weg $x$ in Zusammenhang.

Die Induktionsspannung $U_i$ steht infolge der langgestreckten Induktionsspule 30 vorzugsweise am Anfang der Verzögerungskette zur Verfügung, also an derjenigen Position, an der auch die Einspeisung der Eingangsspannung stattfindet. Bei dieser Ausführungsform kann auf elektrische Leitungen zu bzw. vom Sensorelement verzichtet werden.

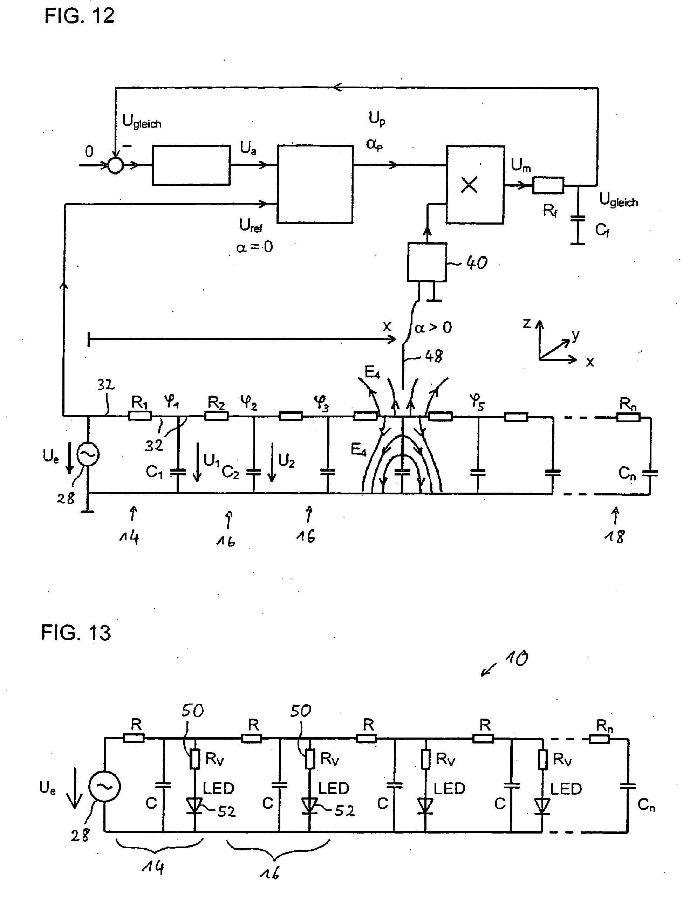

Analog zu der Wegmessung über die Phasenverschiebung des magnetischen Feldes bei einer RC-Verzögerungskette könnte zusätzlich oder alternativ eine Wegmessung über die Phasenverschiebung eines periodischen elektrischen Feldes bei einer RC-Verzögerungskette erfolgen. Eine entsprechende Vorrichtung gemäß einer weiteren bevorzugten Ausführungsform der vorliegenden Erfindung ist in **Fig. 12** als Schaltungsdiagramm dargestellt.

Die Spannungen $U_v$ an den Kapazitäten $C_n$ der einzelnen Verzögerungsglieder 14, 16, 18 definieren Potentiale $\varphi_v$ auf den T-förmigen Leiterabschnitten welche durch die Ausgabeelemente 32 gebildet werden. Wie beim Magnetfeld wird wieder die Phase $\alpha_v$ der Wechselspannung $U_v$ die Weginformation abbilden. Die Phase $\alpha_v$ der Wechselspannung $U_v$ ändern ihren Wert von jedem Verzögerungsglied zum nächsten.

Zur Auslegung des RC-Netzwerks gelten die gleichen Richtlinien wie beim Sensor auf der Grundlage des magnetischen Feldes. Hier besteht das Designziel aber nicht in der Linearität der Phasenverschiebungen der Zweigströme, sondern in der Linearität der Phasenverschiebungen der Spannungen $U_v$ an den Kapazitäten $C$.

Von den Ladungen auf den T-förmigen Leiterabschnitten verlaufen elektrische Feldlinien hin zum Massepotential, siehe Fig. 12. Der Feldverlauf hängt vom Ort des nächsten Massepotentials ab, wie aus dem dargestellten Feldverlauf $E_4$ für das Potential $\varphi_4$ im vierten Verzögerungsglied zu erkennen ist. Das elektrische Feld wird mit einer kapazitiven Feldsonde 48 detektiert, die vorzugsweise vom Sensorelement 12 umfasst ist, vorzugsweise einen elektrisch leitfähigen Draht umfasst und im einfachsten Fall lediglich aus einem kleinen Stück Draht besteht.

Die Abmessung der Feldsonde erzwingt im elektrischen Feld ein Gebiet gleichen Potentials und es bildet sich auf ihr eine entsprechend auswertbare Spannung aus. Die Spannung ist eine Wechselspannung und wird mit einem hochohmigen Verstärker 40 aufbereitet. Je nach Feldverlauf, Elektrodengeometrie und Verstärkereigenschaften ist die Amplitude der Wechselspannung von vielen Einflüssen abhängig Die Weginformation wird erfindungsgemäß wieder aus der Phasenverschiebung ermittelt.

Die Regelung und Auswertung erfolgt vorzugsweise analog zur Wegmessung über die Phasenverschiebung des magnetischen Feldes. Dabei ist vorzugsweise an Stelle der Induktionsspule 30 am Eingang des Verstärkers 40 lediglich die kapazitive Sonde 48 angebracht und die Phasenregelschaltung arbeitet vorzugsweise mit der Referenzspannung $U_{ref} = U_e$ welche der Wechselspannung des Signalgenerators entspricht.

**Fig. 13** zeigt ein Verzögerungsnetzwerk 10 gemäß einer weiteren bevorzugten Ausführungsform der vorliegenden Erfindung. Dabei werden mit den Spannungen an den Kapazitäten *C* der Verzögerungskette über Vorwiderstände 50 Leuchtdioden 52 angesteuert. Die periodische Intensitätsvariation des durch die jeweilige Leuchtdiode 52 emittierten Lichts hat dann die Phase des jeweiligen Potentials $\varphi_v$. Damit die Sinussignale in der Verzögerungskette nicht zu stark durch das nichtlineare Verhalten der Leuchtdioden 52 verzerrt werden, sind die Vorwiderstände $R_v$ vorzugsweise deutlich größer als die Leiterwiderstände *R*. Als Sensorelement 12 dient in dieser Ausführungsform vorzugsweise eine Photodiode mit nachgeschaltetem Transimpedanzverstärker. Die Weginformation liegt wieder in der Phase des Lichtsignals. Die Phasendetektion mit Hilfe des Phasenregelkreises funktioniert vorzugsweise analog bzw. weitgehend identisch zu den gezeigten Ausführungsformen bei der Detektion des magnetischen oder des elektrischen Feldes. Mit dieser optischen Variante ist auch wieder ein Winkelsensor realisierbar. Ebenso ist damit ein zweidimensionaler Wegsensor zur Detektion einer Position in der Ebene realisierbar.

Das bisher beschriebene Sensorprinzip basiert beispielsweise auf einer induktiven Kopplung zwischen dem beispielsweise als RC-Strecke ausgebildeten Verzögerungsnetzwerk 10 als Sender und der Spule 30 als Empfänger. Die Funktionen des Verzögerungsnetzwerks und insbesondere der RC-Verzögerungsstrecke als Sendeelement einerseits und der Spule 30 als Empfangselement andererseits lassen sich aber auch umkehren. Die Spule 30 dient dann als Sender, die RC-Strecke als Empfänger. Der geometrische Aufbau des Sensors und auch die elektrischen Werte von RC-Verzögerungskette und Spule ändern sich dabei vorzugsweise nicht. Bevorzugte Ausführungsformen von Vorrichtungen gemäß diesem umgekehrten Signalfluss bzw. der umgekehrten Kopplungsrichtung sind im folgenden kurz beschrieben.

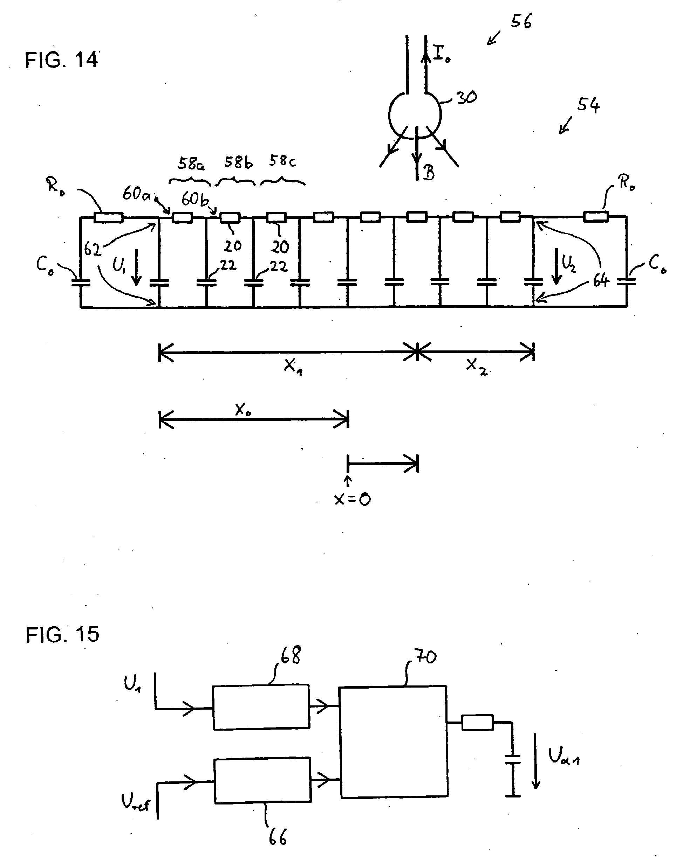

**Fig. 14** zeigt ein Verzögerungsnetzwerk 54 und ein Ausgabeelement bzw. Sendeelement 56 einer Vorrichtung zur Positionsbestimmung gemäß einer weiteren bevorzugten Ausführungsform der vorliegenden Erfindung. Das Ausgabeelement 56 ist relativ zum Verzögerungsnetzwerk 54 bewegbar. Analog zum Sensorelement 12 der oben beschriebenen Ausführungsformen umfasst das Ausgabeelement 56 der in Fig. 14 gezeigten Ausführungsform eine Spule bzw. Leiterschleife 30, die entsprechend der Spule 30 des Sensorelements 12 in den weiter oben beschriebenen Ausführungsformen ausgestaltet sein kann, hier aber nicht als Sensorspule, sondern als Sende- oder Ausgabespule zum Ausgeben bzw. Senden eines periodischen elektromagnetischen Signals (schematisch dargestellt als magnetische Flussdichte B) fungiert. Dazu wird die Spule 30 vorzugsweise von einem periodischen Strom $I_0$ durchflossen, der insbesondere von einem Signalgenerator, wie z.B. einen Wechselstrom- oder Wechselspannungsgenerator, bereitgestellt werden kann.

In dieser bevorzugten Ausführungsform ist das Verzögerungsnetzwerk 54 als RC-Verzögerungskette ausgebildet. Es umfasst eine Vielzahl von Verzögerungsgliedern 58a, 58b, ..., von denen jedes ein paralleles Impedanzglied 22 und ein serielles Impedanzglied 20 aufweist. In der dargestellten bevorzugten Ausführungsform ist das parallele Impedanzglied 22 als Kapazität C und das serielle Impedanzglied 20 als ohmscher Widerstand R ausgebildet. Damit bildet jedes der Verzögerungsglieder einen Tiefpass, wie im Zusammenhang mit den oben gezeigten Ausführungsformen bereits beschrieben. Analog zu den oben beschriebenen Verzögerungsnetzwerken 10 könnten die Verzögerungsglieder 58 auch als Hochpass oder in sonstiger Weise als Phasenschieber ausgebildet sein. Vorzugsweise sind die Verzögerungsglieder 58 im wesentlichen funktionsgleich und/oder baugleich zueinander. Insbesondere sind vorzugsweise die Werte von Kapazität C und ohmschem Widerstand R der Verzögerungsglieder 58 im wesentlichen gleich groß. Insbesondere können die Verzögerungsglieder analog zu den oben beschriebenen Ausführungsformen der Verzögerungsglieder 16 eines Verzögerungsnetzwerks 10 ausgebildet und/oder gekoppelt sein.

In der hier gezeigten Ausführungsform bildet das Verzögerungsnetzwerk 54 zumindest einen Teil eines Empfängers. Im Unterschied zu den oben beschriebenen bevorzugten Ausführungsformen, in denen das Verzögerungsnetzwerk 10 zumindest als Teil eines Senders zum Ausgeben von periodischen Ausgabesignalen fungiert, umfasst das Verzögerungsnetzwerk 54 gemäß der hier gezeigten Ausführungsform vorzugsweise keinen Signalgenerator. Statt dessen wird das vom Ausgabeelement 56 insbesondere über die Spule 30 ausgegebene periodische Ausgabesignal B zumindest teilweise - beispielsweise über induktive und/oder kapazitive Kopplung - über zumindest ein Sensorelement 60a, 60b, ... des Verzögerungsnetzwerk 54 als periodisches Sensorsignal erfasst. Das periodische Sensorsignal durchläuft zumindest teilweise das Verzögerungsnetzwerk 54 und wird zumindest an einem ersten Messausgang 62 des Verzögerungsnetzwerks 54 zumindest teilweise als ein erstes periodisches Messsignal $U_1$ erfasst. Bei jedem Durchlaufen eines Verzögerungsgliedes 58 wird die Phase des Signals um einen bestimmten bzw. bestimmbaren Wert verschoben. Dementsprechend ergibt sich eine Phasendifferenz zwischen dem Messsignal $U_1$ und dem Ausgabesignal B bzw. dem periodischen Spulenstrom $I_0$, wobei die Phasendifferenz vom Sensorelement, also der Sensorposition im Verzögerungsnetzwerk und vom Messausgang, insbesondere der Position des ersten Messausgangs 62 im Verzögerungsnetzwerk abhängt. Damit lässt sich die Position des Ausgabeelements 56 relativ zum Verzögerungsnetzwerk 54 bestimmen.

In der in Fig. 14 gezeigten bevorzugten Ausführungsform wird außerdem an zumindest einem zweiten Messausgang 64 des Verzögerungsnetzwerks 54 ein zweites Messsignal $U_2$ erfasst. Die Phase des periodischen zweiten Messsignals $U_2$ wird beispielsweise mit der Phase des periodischen Ausgabesignals verglichen und aus der Phasenverschiebung wird die Position des Ausgabeelements 56 relativ zum Verzögerungsnetzwerk 54 ermittelt. Alternativ oder zusätzlich wird eine Differenzmessung der Phasensignale für das erste Messsignal $U_1$ und das zweite Messsignal $U_2$ durchgeführt, wodurch Phasenfehler in der elektronischen Auswertung verringert werden.

Beispielsweise wir die Spule 30 mit einem Wechselstrom

$$I_0 = U_{a0} \cdot \sin\left(2 \cdot \pi \cdot f \cdot t - \alpha_{ref}\right)$$

betrieben. Das entstehende Wechselmagnetfeld B strahlt an zumindest einer Stelle in die RC-Strecke ein und erzeugt dort eine Induktionsspannung. Der Ort der Einkopplung ist die zu erfassende Sensorgrösse. Vorzugsweise weist die RC-Strecke an beiden Enden jeweils einen Leitungsabschluss mit $R_0$ und $C_0$ auf. Wie in Fig. 14 gezeigt, propagiert das induzierte Spannungssignal im Verzögerungsnetzwerk 54 nach links entlang des Weges $x_1$ aus und es entsteht am linken Leitungsabschluss bzw. am erstem Messausgang 62 als Messsignal ein periodisches Spannungssignal

$$U_1 = U_{10} \cdot \sin\left(2 \cdot \pi \cdot f \cdot t - \alpha_1\right)$$

mit der Phasenverschiebung $\alpha_1$. Dabei gilt für die Phase vorzugsweise $\alpha_1 = a \cdot x_1$. Der Faktor a ist vorzugsweise von der Anzahl der Verzögerungsglieder 58 und von deren Phasenverschiebungen abhängig. Insbesondere gilt vorzugsweise

$$a \approx \frac{\alpha_{max}}{x_{max}}$$

In der gezeigten Ausführungsform breitet sich das Signal ebenso nach rechts entlang des Weges $x_2$ aus und es entsteht am rechten Leitungsabschluss bzw. am zweiten Messausgang 64 eine Wechselspannung

$$U_2 = U_{20} \cdot \sin\left(2 \cdot \pi \cdot f \cdot t - \alpha_2\right)$$

mit der Phasenverschiebung $\alpha_2$ und der Wegabhängigkeit $\alpha_2 = a \cdot x_2$

Die Wechselspannungen $U_1$ und $U_2$ haben beispielsweise Amplituden im mV-Bereich. Elektronisch lassen sich die Phasenverschiebungen zum Beispiel wieder mit dem weiter oben beschriebenen Phasenregelkreis ermitteln. Es ist jedoch zu bemerken, dass die Wechselspannungen $U_1$ und $U_2$ an den beiden Streckenenden vorzugsweise weitgehend frei von Störungen sind, weil die RC-Kette selbst als vielfaches Filter wirkt. In die Strecke eingekoppelte Störungen werden beim Durchlaufen der Strecke wirksam unterdrückt, so dass an den Streckenenden bzw. an den Messausgängen 62, 64 vorzugsweise nahezu reine Sinussignale erscheinen. Eine Verstärkung hin zu Wechselspannungen im Volt-Bereich wird damit vereinfacht.

Insbesondere wenn nahezu reine Sinussignale zur Verfügung stehen, ist die Umwandlung der Phasenverschiebung in eine entsprechende Gleichspannung auf einfache Art und Weise mit Komparatorbausteinen und nachfolgenden Logikbausteinen möglich, wie beispielhaft in **Fig. 15** gezeigt. Dazu werden die sinusförmigen Spannungen $U_1$ und $U_2$ zunächst vorzugsweise in digitale Signale umgewandelt, indem sie über Komparatoren 66, 68 mit dem Wert Null verglichen werden. Beispielsweise geben die Komparatoren 66, 68 einen digitalen Wert "1" aus, wenn das Eingangssignal größer ist als Null, und einen digitalen Wert "0" aus, wenn des Eingangsignal kleiner als Null ist. Über eine XOR- oder NAND-Logik 70 erfolgt dann eine Verknüpfung mit dem entsprechen digitalisierten Referenzsignal $U_{ref}$, z.B. einem Referenzsignal der Sendespule. Der mathematische Mittelwert über der Zeit ist eine lineare Funktion der zu detektierenden Phase und wird beispielsweise analogelektronisch mit einem RC-Tiefpass als Spannungsabfall $U_{\alpha 1}$ ermittelt. Das Ergebnis ist die Gleichspannung $U_{\alpha 1}$, die proportional zur Phasenverschiebung $\alpha_1$ ist. Ebenso ist $U\alpha_2$ dann proportional zur Phasenverschiebung $\alpha_2$. Für die linearen Zusammenhänge gilt vorzugsweise

$$U_{\alpha 1} = b \cdot \alpha_1 \quad \text{und} \quad U_{\alpha 2} = b \cdot \alpha_2 \quad \text{mit} \quad b = \frac{U_{max}}{\alpha_{max}} \; .$$

Insgesamt erhält man

$$U_{\alpha 1} = b \cdot a \cdot x_1 \quad \text{und} \quad U_{\alpha 2} = b \cdot a \cdot \alpha_2 \; .$$

Die Abhängigkeiten vom Weg x folgen mit

$$d = a \cdot b = \frac{\alpha_{max}}{x_{max}} \cdot \frac{U_{max}}{\alpha_{max}} = \frac{U_{max}}{x_{max}}$$

schließlich zu

$$U_{\alpha 1} = d \cdot x_1 \quad \text{und} \quad U_{\alpha 2} = d \cdot \alpha_2 \; .$$

Die Weginformation ist dabei sowohl in $U_{\alpha 1} = d \cdot x_1$ als auch in $U_{\alpha 2} = d \cdot \alpha_2$ vorhanden. Diese doppelte Information kann vorteilhaft für eine Reduzierung des Elektronik-Phasenfehlers genutzt werden. Zunächst könnte in einer bevorzugten Ausführungsform aus Symmetriegründen der Bezugspunkt x = 0 für den zu messenden Weg x in die Mitte der Verzögerungsnetzwerks 54 gelegt werden, wie in Fig. 14 beispielhaft gezeigt. Die halbe Strecke hat den Wert

$$x_0 = \frac{x_1 + x_2}{2} \; .$$

Dann folgt für den Weg x

$$x = x_1 - x_0 \quad \text{und} \quad x = x_1 - \frac{x_1 + x_2}{2}$$

und somit schließlich

$$x = \frac{x_1 - x_2}{2}$$

Daraus erhält man

$$x_1 = \frac{1}{d} U_{\alpha 1} \quad \text{sowie} \quad x_2 = \frac{1}{d} U_{\alpha 2}$$

und dann

$$x = \frac{U_{\alpha 1} - U_{\alpha 2}}{2 \cdot d}$$

Der Weg x ist vorzugsweise proportional zur Differenz der Ausgangsgleichspannungen $U_{\alpha 1}$, und $U_{\alpha 2}$. Beide Gleichspannungen werden vorzugsweise mit Hilfe einer Umschaltung durch den gleichen Phasensensor erzeugt. Der sich ergebende Gesamtfehler infolge dieser Signalverarbeitung sei $U_F$ und ändert sich vorzugsweise zumindest kurzfristig nicht. Die Fehlerspannung $U_F$ kann viele Ursachen haben. Zum Beispiel Phasenfehler der Vorverstärker, Fehler eines eventuell genutzten Phasenregelkreises, oder endliche Schaltzeiten von Komparatoren.

Durch die Differenzbildung

$$x = \frac{U_{\alpha 1} + U_F - (U_{\alpha 2} + U_F)}{2 \cdot d} = \frac{U_{\alpha 1} - U_{\alpha 2}}{2 \cdot d}$$

$$U_{Diff} = U_{\alpha 1} - U_{\alpha 2}$$

$$x = \frac{U_{Diff}}{2 \cdot d}$$

wirken sich diese Fehler in weiten Grenzen nicht aus, was vorzugsweise zu einer verbesserten und insbesondere genaueren und verlässlicheren Positionsbestimmung führt. Es sei weiterhin angemerkt, dass durch die Differenzbildung vorzugsweise Symmetrie entsteht und es folgt damit vorzugsweise in der Mitte der Strecke $U_{Diff} = 0$. Die beschriebene Umkehrung mit Nutzung der Spule als Sender und Nutzung des Verzögerungsnetzwerks als Empfänger lässt sich anlog bei allen oben beschriebenen Anordnungen und Ausgestaltungen von Vorrichtungen zur Positionsbestimmung und insbesondere den beschriebenen Verzögerungsnetzwerken anwenden. Insbesondere funktioniert dieses auch bei einer langgestreckten Induktionsspule S und einem feldführenden Koppelelement analog zu der in Fig. 11A beschriebenen Ausführungsform.

In einer anderen bevorzugten Ausführungsform wird zusätzlich zur Differenz $U_{Diff} = U_{\alpha 1} - U_{\alpha 2}$ auch die Summe $U_{sum} = U_{\alpha 1} + U_{\alpha 2}$ dieser Signale bestimmt und der Quotient $\frac{U_{Diff}}{U_{sum}}$ gebildet. Auf Basis dieses Quotienten wird dann vorzugsweise die gesuchte Position ermittelt. Diese Vorgehensweise vereinfacht die Kalibrierung der Vorrichtung. Vorzugsweise ist keine gesonderte Kalibrierung erforderlich.

In einer weiteren bevorzugten Ausführungsform wird das zweite Messsignal als Referenzsignal erfasst und aus einer Phasenverschiebung bzw. einer relativen Phasenlage des ersten Messsignals zum zweiten Messsignals wird dann vorzugsweise die Position des Ausgabeelements relativ zum Verzögerungsnetzwerk ermittelt.

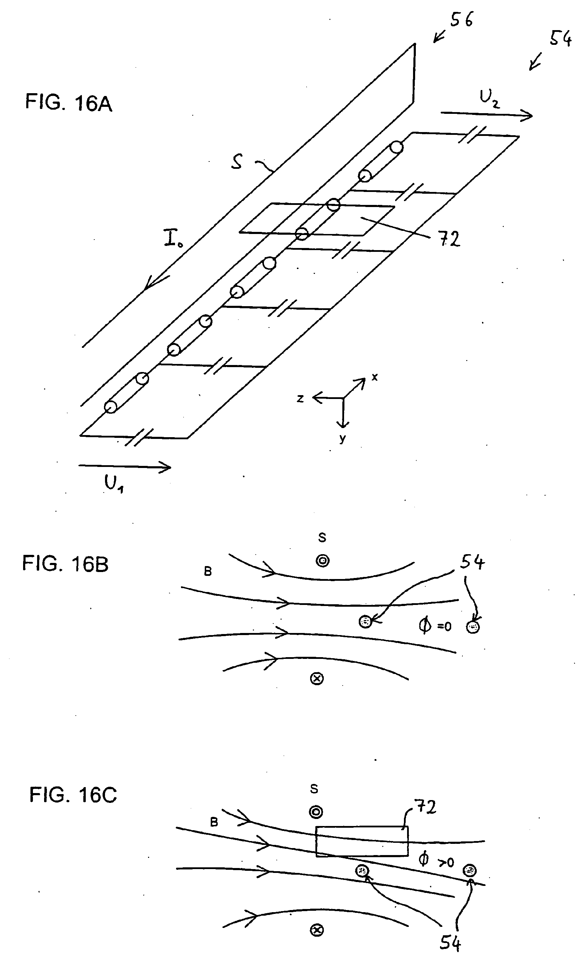

In einer weiteren bevorzugten Ausführungsform, wie sie in **Fig. 16A** dargestellt ist, dient eine langgestreckte Spule oder Leiterschleife S als Komponente eines Senders, das Verzögerungsnetzwerk 54 fungiert als Empfänger. Das Ausgabeelement 56 wird zumindest teilweise von einem magnetischen Leiter, insbesondere von einem magnetisch leitenden Blechstreifen als Koppelelement 72 gebildet, das relativ zum Verzögerungsnetzwerk 54 bewegbar ist. Dieses Koppelelement 72 umfasst dabei vorzugsweise Material mit hoher magnetischer Suszeptibilität, insbesondere ferromagnetisches Material, analog zu dem in Fig. 11A beschriebenen Sensorelement 12. Damit wird lokal die magnetische Flussdichte B bzw. die magnetische Feldstärke $H_n$ beeinflusst bzw. verändert. Beispielhaft ist dies in **Fig. 16B** und **Fig. 16C** gezeigt. Darin ist der Verlauf der magnetischen Flusslinien ohne Koppelelement 72 (Fig. 16B) und in Anwesenheit des Koppelelements 72 (Fig. 16C) dargestellt. Ohne Koppelelement 72 wird in die Fläche der RC-Verzögerungsstrecke 54 kein resultierender Fluss Φ eingekoppelt. Mit Koppelelement 72 ist der Feldverlauf unsymmetrisch und in die Fläche der RC-Verzögerungsstrecke wird jetzt ein Fluss Φ eingeleitet.

Abhängig von der Position des Koppelelements 72 wird somit das magnetische Feld bzw. der magnetische Fluss Φ im Bereich zumindest eines Verzögerungsglieds 58 des Verzögerungsnetzwerks 54 derart beeinflusst, dass dies von dem Sensorelement 60 des entsprechenden Verzögerungsglieds als Induktionssignal und insbesondere als Sensorsignal erfassbar ist. Während in dem gezeigten Beispiel ohne Koppelelement 72 der magnetische Fluss Φ innerhalb des dargestellten bzw. durch das dargestellte Verzögerungsglied 58 verschwindet, ist der Fluss Φ mit Koppelelement 72 ungleich Null und kann zur Induktion eines periodischen Sensorsignals führen.

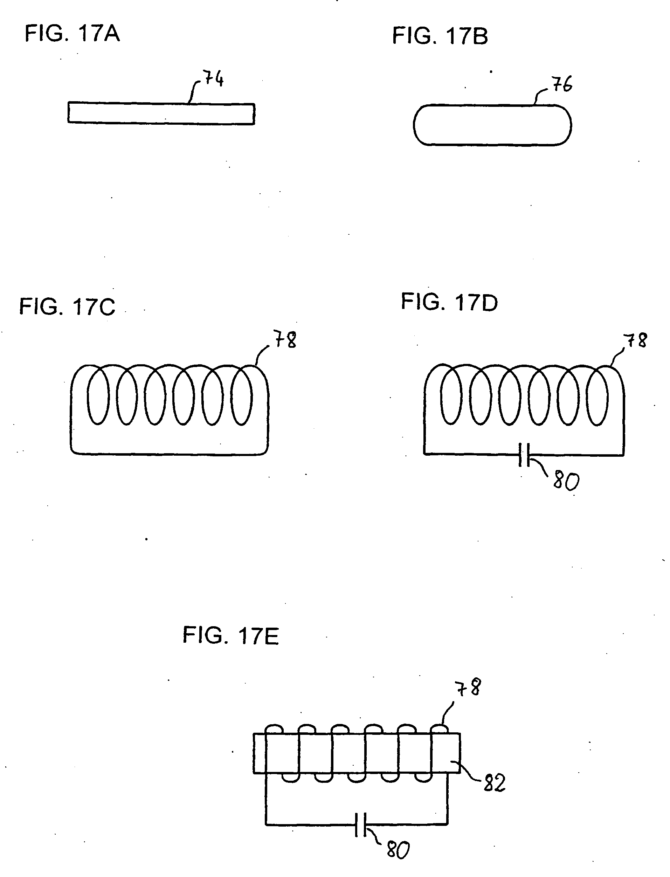

Das Koppelelement 72 kann auf verschiedene Weise ausgeführt sein. Fig. 17A bis 17E zeigt bevorzugte Ausführungsformen von Koppelelementen. In einer bevorzugten Ausführungsform umfasst das Koppelelement einen Ferritstab 74, wie beispielhaft in **Fig. 17A** dargestellt. Dieser weist eine besonders hohe magnetische Suszeptibilität auf und kann damit einen besonders grossen Fluss in die RC-Verzögerungsstrecke hineinleiten.

Auch ein kurzgeschlossener Drahtring 76, wie schematisch in **Fig. 17B** dargestellt, oder eine kurzgeschlossene Spule 78 (**Fig. 17C**) mit vielen Windungen beeinflussen das Feld und/oder verändern dessen Symmetrie. Die Wirkung der Spule lässt sich erhöhen, indem man sie durch eine Kapazität 80 zu einem Resonanzkreis erweitert (**Fig. 17D**). In einer weiteren bevorzugten Ausführungsform umfasst das Koppelelement 72 einen Resonzkreis mit einer Spule 78, in der sich zumindest teilweise ein Spulenkern 82 befindet, der Ferrit, insbesondere einen Ferrit-Stab 74 umfasst (**Fig. 17E**). Dadurch lässt sich das magnetische Feld und somit das Ausgabesignal besonders effizient beeinflussen. Bei der Resonanzfrequenz fliesst ein grosser felderzeugender Blindstrom in der Spule und der Ferritstab führt geometrisch das Feld in das Verzögerungsnetzwerk hinein.

In einer weiteren bevorzugten Ausführungsform umfasst das Koppelelement 72 ein optisch reflektierendes Material oder Medium. Insbesondere umfasst das Koppelelement in dieser bevorzugten Ausführungsform vorzugsweise ein Spiegelelement. Dies ist besonders dann bevorzugt, wenn das Ausgabe- bzw. Sendesignal ein optischen Signal umfasst. Diese Ausgestaltung des Koppelelements 72 kann für beide oben beschriebenen Koppelrichtungen eingesetzt werden.

Das hier vorgestellte Sensorprinzip lässt sich technologisch sehr einfach realisieren. Als Basismaterial wird vorzugsweise herkömmliches Platinenmaterial aus der üblichen Elektronikfertigung verwendet. Auch Keramiksubstrate und flexible Leiterfolien sind einsetzbar. Die elektrischen Widerstände können als diskrete Elemente in großen und/oder kleinen Bauformen auf der Platine befestigt werden. Besonders mit SMD-Widerständen sind kleine geometrische Abmessungen erreichbar. Ebenfalls sind Dickschichtwiderstände einsetzbar. Auch für die Kapazitäten können große und/oder kleine Bauformen Verwendung finden. Auch hier sind SMD-Bauformen zur Realisierung kleiner Geometrien vorteilhaft. Die Widerstände und Kapazitäten lassen sich auch vorteilhaft aus dem metallischen Beschichtungsmaterial direkt auf der Platine selbst realisieren.

**Bezugszeichenliste**

| | |
|---|---|
| 10 | Verzögerungsnetzwerk |
| 12 | Sensorelement |
| 14 | erstes Verzögerungsglied |
| 16 | Verzögerungsglieder |
| 18 | letztes Verzögerungsglied |
| 20 | serielles Impedanzglied |
| 22 | paralleles Impedanzglied |
| 24 | Verzögerungssignaleingang |
| 26 | Verzögerungssignalausgang |
| 28 | Signalgenerator |
| 30 | Induktions- bzw. Sensorspule |
| 32 | Ausgabeelement |
| 34 | Referenzsignal |
| 36 | elektronischer Phasenschieber |
| 38 | Multiplizierer |

40 Verstärker
42 Integralregler
44 Tiefpassfilter
46 Rückkopplungsleitung
48 kapazitive Feldsonde
50 Vorwiderstand
52 Leuchtdiode
54 Verzögerungsnetzwerk
56 Ausgabeelement
58 Verzögerungsglied
60 Sensorelement
62 erster Messausgang
64 zweiter Messausgang
66 Komparator
68 Komparator
70 Logik
72 Koppelelement
74 Ferritstab
76 Drahtring
78 Spule
80 Kapazität
82 Spulenkern

**Patentansprüche**

1. Vorrichtung zur Positionsbestimmung umfassend:

   - zumindest ein Verzögerungsnetzwerk (10) mit

     -- zumindest einem ersten Verzögerungsglied (14), das ausgelegt ist, über zumindest ein an einer ersten Ausgabeposition des Verzögerungsnetzwerks (10) angeordnetes erstes Ausgabeelement (32) ein erstes periodisches Ausgabesignal auszugeben; und
     -- zumindest einem zweiten Verzögerungsglied (16, 18), das ausgelegt ist, über zumindest ein an einer zweiten, von der ersten verschiedenen Ausgabeposition des Verzögerungsnetzwerks (10) angeordnetes zweites Ausgabeelement (32), ein zweites periodisches Ausgabesignal auszugeben, dessen Phase relativ zum ersten Ausgabesignal um eine Verzögerungsphase verschoben ist; und

   - eine Sensoreinrichtung, welche zumindest ein relativ zum Verzögerungsnetzwerk (10) bewegbares Sensorelement (12) umfasst, welches ausgelegt ist, abhängig von der Position des Sensorelements (12) relativ zum Verzögerungsnetzwerk (10) zumindest eines der Ausgabesignale zumindest teilweise als periodisches Sensorsignal zu erfassen, wobei die Sensoreinrichtung ausgelegt ist, eine Phasenverschiebung des Sensorsignals relativ zu einem periodischen Referenzsignal zu ermitteln, dessen Phase relativ zum ersten Ausgabesignal um eine Referenzphase verschoben ist,

   wobei die Verzögerungsglieder (14, 16, 18) jeweils einen Verzögerungssignaleingang (24) zum Erfassen eines Verzögerungseingangssignals aufweisen und ausgelegt sind, jeweils ein um eine Verzögerungsphase relativ zum Verzögerungseingangssignal verschobenes Verzögerungsausgangssignal zu erzeugen, und
   wobei das Verzögerungsnetzwerk (10) eine Verzögerungskette umfasst, in der eine Vielzahl von Verzögerungsgliedern (14, 16, 18) derart aufeinander folgend geschaltet ist, dass abgesehen von einem in der Verzögerungskette ersten Verzögerungsglied (14) für jedes weitere Verzögerungsglied (16, 18) der Verzögerungssignaleingang (24) mit einem Verzögerungssignalausgang (26) des in der Verzögerungskette vorangehenden Verzögerungsgliedes (14, 16) zur Übertragung des Verzögerungsausgangssignals der vorangehenden Verzögerungsgliedes (14, 16) in Signalverbindung steht.

2. Vorrichtung nach einem der vorangegangenen Ansprüche, wobei das Verzögerungsnetzwerk eine Vielzahl von Verzögerurigsgliedern umfasst, deren Ausgabeelemente im wesentlichen entlang einer räumlichen Dimension, insbesondere entlang einer Gerade, äquidistant angeordnet sind und deren Verzögerungsphase in der Reihenfolge der räumlichen Anordnung der Ausgabeelemente eine ansteigende Folge mit gleichen Differenzen aufeinander folgender Glieder bilden.

3. Vorrichtung nach Anspruch 1 oder 2, welche zumindest zwei Verzögerungsnetzwerke umfasst, deren Ausgabesignale unterschiedliche Frequenzen aufweisen und deren die Ausgabeelemente entlang unterschiedlicher räumlicher Dimensionen angeordnet sind.

4. Vorrichtung zur Positionsbestimmung umfassend:

    - zumindest ein Ausgabeelement (56), welches ausgelegt ist, ein periodisches Ausgabesignal auszugeben,
    - zumindest ein relativ zum Ausgabeelement (56) bewegbares Verzögerungsnetzwerk (54) mit

        -- zumindest einem an einer ersten Sensorposition des Verzögerungsnetzwerks (54) angeordneten ersten Sensorelement (60a) zum Erfassen eines ersten periodischen Sensorsignals, wobei das Verzögerungsnetzwerk (54) ausgelegt ist, in Abhängigkeit vom erfassten ersten Sensorsignal an zumindest einem ersten Messausgang (62) eine erste periodische Messsingalkomponente eines ersten periodischen Messsignals auszugeben, deren Phase relativ zum ersten Sensorsignal um eine erste Verzögerungsphase des ersten Messausgangs verschoben ist;
        -- zumindest einem an einer zweiten, von der ersten verschiedenen Sensorposition des Verzögerungsnetzwerks (54) angeordneten zweiten Sensorelement (60b) zum Erfassen eines zweiten periodischen Sensorsignals, wobei das Verzögerungsnetzwerk (54) ausgelegt ist, in Abhängigkeit vom erfassten zweiten Sensorsignal an dem zumindest einen ersten Messausgang (62) eine zweite periodische Messsingalkomponente des ersten periodischen Messsingals auszugeben, deren Phase relativ zum zweiten Sensorsignal um eine zweite, von der ersten verschiedene Verzögerungsphase des ersten Messausgangs verschoben ist; und

    - eine Sensoreinrichtung, welche ausgelegt ist, eine erste Phasenverschiebung des ersten periodischen Messsignals relativ zu einem periodischen Referenzsignal zu ermitteln.

5. Vorrichtung nach Anspruch 4, wobei das Verzögerungsnetzwerk (54) zumindest ein erstes und ein zweites Verzögerungsglied (58a, 58b) umfasst, die jeweils das erste bzw. zweite Sensorelement (60a, 60b) umfassen.

6. Vorrichtung nach Anspruch 4 oder 5, wobei das Verzögerungsnetzwerk (54) zumindest einen zweiten Messausgang (64) umfasst und ausgelegt ist

    - in Abhängigkeit vom erfassten ersten Sensorsignal an dem zumindest einen zweiten Messausgang (64) eine zweite periodische Messsingalkomponente eines zweiten periodischen Messsingals auszugeben, deren Phase relativ zum ersten Sensorsignal um eine erste Verzögerungsphase des zweiten Messausgangs verschoben ist; und
    - in Abhängigkeit vom erfassten zweiten Sensorsignal an dem zumindest einen zweiten Messausgang (64) eine zweite periodische Messsingalkomponente des zweiten periodischen Messsingals auszugeben, deren Phase relativ zum zweiten Sensorsignal um eine zweite Verzögerungsphase des zweiten Messausgangs verschoben ist, und

    wobei die Sensoreinrichtung ausgelegt ist, eine zweite Phasenverschiebung des zweiten periodischen Messsignals relativ zum periodischen Referenzsignal zu ermitteln, die Differenz zwischen der ersten Phasenverschiebung des ersten periodischen Messsignals relativ zum periodischen Referenzsignal und der zweiten Phasenverschiebung des zweiten periodischen Messsignals relativ zum periodischen Referenzsignal zu ermitteln und abhängig von dieser Differenz die Position des Ausgabeelements relativ zum Verzögerungsnetzwerk zu bestimmen.

7. Vorrichtung nach einem der Ansprüche 1 bis 3 oder nach einem der Ansprüche 5 oder 6, wobei die Verzögerungsglieder (14, 16, 18) jeweils eine Spannungsteilerschaltung mit jeweils einem seriellen Impedanzglied (20) und einem parallelen Impedanzglied (22) derart umfassen, dass das Verzögerungseingangssignal an einer Serienschaltung aus dem seriellen (20) und dem parallelen Impedanzglied (22) anliegt und das am parallelen Impedanzglied (22) anliegende Signal das Verzögerungsausgangssignal bildet.

8. Vorrichtung nach einem der vorangegangenen Ansprüche, wobei das Ausgabeelement bzw. zumindest eines der Ausgabeelemente (32) ein Senderelement zum Erzeugen eines elektromagnetischen Feldes umfasst und wobei das Sensorelement bzw. zumindest eines der Sensorelemente einen induktiven Sensor und/oder einen kapazitiven Sensor umfasst.

9. Vorrichtung nach einem der vorangegangenen Ansprüche, wobei das Ausgabeelement bzw. zumindest eines der Ausgabeelemente (32) einen Lichtemitter, insbesondere eine LED umfasst und wobei das Sensorelement bzw. zumindest eines der Sensorelemente einen Lichtsensor insbesondere eine Photodiode umfasst.

10. Verfahren zur Positionsbestimmung umfassend die Schritte:

- Ausgeben zumindest eines ersten periodischen Ausgabesignals an zumindest einer ersten Ausgabeposition;
- Ausgeben zumindest eines zweiten periodischen Ausgabesignals, dessen Phase relativ zum ersten Ausgabesignal um eine Verzögerungsphase verschoben ist, an zumindest einer zweiten, von der ersten verschiedenen Ausgabeposition;
- zumindest teilweises Erfassen zumindest eines der periodischen Ausgabesignale als ein periodisches Sensorsignal mittels eines relativ zu den Ausgabepositionen bewegbaren Sensorelements (12);
- Ermitteln einer Phasenlage des periodischen Sensorsignals relativ zu den Ausgabesignalen; und
- Bestimmen einer Position des Sensorelements relativ zu den Ausgabepositionen aus der ermittelten Phasenlage des Sensorsignals relativ zu den Ausgabesignalen,

wobei die Schritte des Ausgebens des ersten und zweiten periodischen Ausgabesignals die Schritte umfassen:

- Bereitstellen eines periodischen Eingangssignals;
- Erzeugen eines ersten periodischen Verzögerungssignals durch Verzögern des periodischen Eingangssignals um eine erste Verzögerungsphase;
- Erzeugen eines zweiten periodischen Verzögerungssignals durch Verzögern des ersten periodischen Verzögerungssignals um eine zweite Verzögerungsphase,

wobei das erste bzw. zweite Ausgabesignal phasengleich mit dem ersten bzw. zweiten Verzögerungssignal ausgegeben wird.

11. Verfahren nach Anspruch 10, welches einen Schritt des Bereitstellens eines periodischen Referenzsignals derart umfasst, dass die Phasenverschiebung des periodischen Sensorsignals relativ zum Referenzsignal eine lineare Funktion des Abstands des Sensorelements von einer Referenzposition ist.

12. Verfahren zur Positionsbestimmung umfassend die Schritte:

- Ausgeben eines periodischen Ausgabesignals mittels einer relativ zu einer ersten und einer zweiten Sensorposition bewegbaren Ausgabeelements;
- zumindest teilweises Erfassen des periodischen Ausgabesignals an zumindest einer der zumindest zwei Sensorpositionen als zumindest ein erstes und/oder zweites Sensorsignal;
- Erzeugen einer ersten periodischen Messsignalkomponente eines ersten periodischen Messsignals in Abhängigkeit vom Erfassen des ersten Sensorsignals derart, dass deren Phase relativ zum ersten Sensorsignal um eine erste Verzögerungsphase verschoben ist;
- Erzeugen einer zweiten periodischen Messsignalkomponente eines periodischen Messsignals in Abhängigkeit vom Erfassen des zweiten Sensorsignals derart, dass deren Phase relativ zum zweiten Sensorsignal um eine zweite, von der ersten verschiedene Verzögerungsphase verschoben ist;
- Ermitteln einer Phasenlage des periodischen Messsignals relativ zu einem Referenzsignal; und
- Bestimmen einer Position des Ausgabelements relativ zu den Sensorpositionen aus den ermittelten Phasenlage des Messsignals relativ zum Referenzsignal.

**Claims**

1. A device for determining position comprising:

- at least one delay network (10) having

-- at least one delay element (14) that is designed to output a first, periodic output signal via at least one first output element (32) arranged at a first output position of the delay network (10); and
-- at least one second delay element (16, 18) that is designed to output a second, periodic output signal via at least one second output element (32) arranged at a second output position of the delay network (10) that is different from the first one, the phase of which is shifted relative to the first output signal by a delay phase; and

- a sensor device that comprises at least one sensor element (12) that can be moved relative to the delay network (10) and is designed to detect at least one of the output signals at least partially as a periodic signal depending on the position of the sensor element (12) relative to the delay network (10), wherein the sensor device is designed to detect a phase shift of the sensor signal relative to a periodic reference signal, the phase of which is shifted relative to the first output signal by a reference phase,

wherein the delay elements (14, 16, 18) each have a delay signal input (24) for detecting a delay signal input signal and are designed to generate a delay output signal in each case that is shifted by a delay phase relative to the delay input signal, and
wherein the delay network (10) comprises a delay chain in which a plurality of delay elements (14, 16, 18) are connected sequentially such that, apart from a first delay element (14) in the delay chain, the delay signal input (24) is connected by a signal to a delay signal output (26) of the preceding delay element (14, 16) in the delay chain to transmit the delay output signal of the preceding delay element (14, 16) for each other delay element (16, 18).

2.  The device according to one of the prior claims, wherein the delay network comprises a plurality of delay elements with output elements that are substantially arranged equidistant along one spatial dimension, especially along a straight line, and their delay phase forms a rising sequence in the sequence of the spatial arrangement of the output elements with equidistant sequentially following elements.

3.  The device according to claim 1 or 2 that comprises at least two delay networks with output signals having different frequencies and with output elements that are arranged along different spatial dimensions.

4.  The device for determining position comprising:

    - at least one output element (56) that is designed to output a periodic output signal,
    - at least one delay network (54) that is movable relative to the output element (56) having:

        -- at least one first sensor element (60a) arranged at a first sensor position of the delay network (54) for detecting a first periodic sensor signal, wherein the delay network (54), depending on the detected first sensor signal, is designed to output a first, periodic measuring component of a first periodic measuring signal at at least one first measuring output (62) with a phase which is shifted relative to the first sensor signal by a first delay phase of the first measuring output;
        -- at least one second sensor element (60b) arranged at a second sensor position of the delay network (54) different from the first one for detecting a second periodic sensor signal, wherein the delay network (54), depending on the detected second sensor signal, is designed to output a second periodic measuring signal component of the first periodic measuring signal at at least a first measuring output (62) with a phase that is shifted relative to the second sensor signal by a second delay phase of the first measuring output that is different from the first one; and

    - a sensor device that is designed to determine a first phase shift of the first periodic measuring signal relative to a periodic reference signal.

5.  The device according to claim 4, wherein the delay network (54) comprises at least one first and one second delay element (58a, 58b) that respectively comprise the first and second sensor element (60a, 60b).

6.  The device according to claim 4 or 5, wherein the delay network (54) comprises at least one second measuring output (64) and is designed:

    - depending on the detected first sensor signal, to output a second periodic measuring signal component of a second periodic measuring signal at at least one second measuring output (64) with a phase that is shifted relative to the first sensor signal by a first delay phase of the second measuring output; and
    - depending on the detected second sensor signal, to output a second periodic measuring signal component of the second periodic measuring signal at the at least one second measuring output (64) with a phase that is shifted relative to the second sensor signal by a second delay phase of the second measuring output, and

wherein the sensor device is designed to detect a second phase shift of the second periodic measuring signal relative to the periodic reference signal, to detect the difference between first phase shift of the first periodic measuring signal relative to the periodic reference signal, and the second phase shift of the second periodic measuring signal relative to the periodic reference signal and, depending on this difference, to determine the position of the output element relative to the delay network.

7. The device according to one of claims 1 to 3 or according to one of claims 5 or 6, wherein the delay elements (14, 16, 18) each comprise a voltage divider circuit each with a serial impedance element (20) and a parallel impedance element (22) such that the delay input signal is applied to a series circuit consisting of the serial (20) and parallel impedance element (22), and signal applied to the parallel impedance element (22) forms the delay output signal.

8. The device according to one of the prior claims, wherein the output signal or at least one of the output elements (32) comprises a transmitter element for generating an electromagnetic field, and wherein the sensor element or least one of the sensor elements comprises an inductive sensor and/or a capacitive sensor.

9. The device according to one of the prior claims, wherein the output element, or at least one of the output elements (32), comprises a light emitter, especially an LED, and wherein the sensor element or at least one of the sensor elements comprises a light sensor, especially a photodiode.

10. A method for determining position comprising the steps:

- at least one first periodic output signal is output at at least one first output position;
- at least one second periodic output signal is output with a phase that is shifted relative to the first output signal by a delay phase at at least one second output position that is different from the first one;
- at least partial detection of at least one of the periodic output signals as a periodic sensor signal by means of a sensor element (12) that can be moved relative to the output positions;
- detection of a phase position of the periodic sensor signal relative to the output signals; and
- determination of a position of the sensor element relative to the output positions from the determined phase position of the sensor signal relative to the output signals,

wherein the steps for outputting the first and second periodic output signals comprises the steps:

- providing a periodic input signal;
- generating a first, periodic delay signal by delaying the periodic input signal by a first delay phase;
- generating a second periodic delay signal by delaying the first periodic delay signal by a second delay phase,

wherein the first or second output signal are output in-phase with the first or second delay signal.

11. The method according to claim 10 which comprises a step of providing a periodic reference signal such that the phase shift of the periodic sensor signal is relative to the reference signal of a linear function of the distance of the sensor elements of a reference position.

12. The method for determining position comprising the steps:

- a periodic output signal is output by means of an output element that can be moved relative to first and second sensor position;
- the periodic output signal is at least partially detected at at least one of at least two sensor positions as at least one first and/or second sensor signal;
- a first periodic measuring signal component of a first periodic measuring signal is generated depending on the detection of the first sensor signal such that its phase is shifted relative to the first sensor signal by first delay phase;
- a second periodic measuring signal component of a periodic measuring signal is generated depending on the detection of the second sensor signal such that its phase is shifted relative to the second sensor signal by a second delay phase different from the first one;
- a phase position of the periodic measuring signal is detected relative to a reference signal;

- a position of the output elements relative to the sensor positions is determined from the detected phase position of the measuring signal relative to the reference signal.

**Revendications**

1. Dispositif de définition de position, comprenant :

   - au moins un circuit à retard (10) avec

     -- au moins un premier élément de retard (14) qui est conçu pour délivrer un premier signal de sortie périodique par le biais d'au moins un premier élément de sortie (32) disposé dans une première position de sortie du circuit à retard (10) ; et
     -- au moins un deuxième élément de retard (16, 18) qui est conçu pour, par le biais d'au moins un deuxième élément de sortie (32) disposé dans une deuxième position de sortie différente de la première, délivrer un deuxième signal de sortie périodique dont la phase est décalée d'une phase de retard par rapport au premier signal de sortie ; et

   - un équipement de capteur qui comprend au moins un élément de capteur (12) qui est mobile par rapport au circuit à retard (10) et qui est conçu pour, en fonction de la position de l'élément de capteur (12) par rapport au circuit à retard (10), détecter au moins un des signaux de sortie au moins partiellement en tant que signal de capteur périodique, l'équipement de capteur étant conçu pour déterminer un déphasage du signal de capteur par rapport à un signal de référence périodique qui est déphasé d'une phase de référence par rapport au premier signal de sortie,

   les éléments à retard (14, 16, 18) présentant respectivement un entrée de signal de retard (24) pour la détection d'un signal d'entrée de retard et étant conçus pour produire respectivement un signal de sortie de retard décalé d'une phase de retard par rapport au signal d'entrée de retard, et le circuit à retard (10) comprenant une chaîne de temporisation dans laquelle sont montés une multiplicité d'éléments de retard (14, 16, 18) se succédant les uns les autres de sorte que, à part un premier élément de retard (14) dans la chaîne de temporisation, pour chaque autre élément de retard (16, 18) l'entrée de signal de retard (24) est en connexion de signaux avec une sortie de signal de retard (26) de l'élément de retard (14, 16) précédent dans la chaîne de temporisation pour la transmission du signal de sortie de retard de l'élément de retard (14, 16) précédent.

2. Dispositif selon une des revendications précédentes, le circuit à retard comprenant une multiplicité d'éléments de retard dont les éléments de sortie sont disposés de façon équidistante essentiellement le long d'une dimension spatiale, en particulier le long d'une droite, et dont la phase de retard forme, dans la succession de l'agencement spatial des éléments de sortie, une suite croissante avec des différences identiques d'éléments qui se succèdent.

3. Dispositif selon la revendication 1 ou 2, qui comprend au moins deux circuits à retard dont les signaux de sortie présentent différentes fréquences et dont les éléments de sortie sont disposés le long de différentes dimensions spatiales.

4. Dispositif de définition de position, comprenant :

   - au moins un élément de sortie (56) qui est conçu pour délivrer un signal de sortie périodique,
   - au moins un circuit à retard (54) mobile par rapport à l'élément de sortie (56) avec

     -- au moins un premier élément de capteur (60a) disposé dans une première position de capteur du circuit à retard (54) pour la détection d'un premier signal de capteur périodique, le circuit à retard (54) étant conçu pour, en fonction du premier signal de capteur détecté, délivrer sur au moins une première sortie de mesure (62) une première composante de signal de mesure périodique d'un premier signal de mesure périodique qui est, par rapport au premier signal de capteur, déphasée d'une première phase de retard de la première sortie de mesure ;
     -- au moins un deuxième élément de capteur (60b) disposé dans une deuxième position de capteur du circuit à retard (54) différente de la première pour la détection d'un deuxième signal de capteur périodique, le circuit à retard (54) étant conçu pour, en fonction du deuxième signal de capteur détecté, délivrer sur la première sortie de mesure (62), au moins au nombre de un, une deuxième composante de signal de mesure périodique du premier signal de mesure périodique qui est, par rapport au deuxième signal de capteur, déphasée d'une deuxième phase de retard de la première sortie de mesure qui est différente de la première ; et

- un équipement de capteur qui est conçu pour déterminer un premier déphasage du premier signal de mesure périodique par rapport à un signal de référence périodique.

**5.** Dispositif selon la revendication 4, le circuit à retard (54) comprenant au moins un premier et un deuxième élément de retard (58a, 58b) qui comprennent respectivement le premier et le deuxième élément de capteur (60a, 60b).

**6.** Dispositif selon la revendication 4 ou 5, le circuit à retard (54) comprenant au moins une deuxième sortie de mesure (64) et étant conçu pour,

- en fonction du premier signal de capteur détecté sur la deuxième sortie de mesure (64), au moins au nombre de un, délivrer une deuxième composante de signal de mesure périodique d'un deuxième signal de mesure périodique qui est, par rapport au premier signal de capteur, déphasée d'une première phase de retard de la deuxième sortie de mesure ; et pour,
- en fonction du deuxième signal de capteur détecté sur la deuxième sortie de mesure (64), au moins au nombre de un, délivrer une deuxième composante de signal de mesure périodique du deuxième signal de mesure périodique qui est, par rapport au deuxième signal de capteur, déphasée d'une deuxième phase de retard de la deuxième sortie de mesure, et

l'équipement de capteur étant conçu pour déterminer un deuxième déphasage du deuxième signal de mesure périodique par rapport au signal de référence périodique, pour déterminer la différence entre le premier déphasage du premier signal de mesure périodique par rapport au signal de référence périodique et le deuxième déphasage du deuxième signal de mesure périodique par rapport au signal de référence périodique et pour déterminer, en fonction de cette différence, la position de l'élément de sortie par rapport au circuit à retard.

**7.** Dispositif selon une des revendications 1 à 3 ou selon une des revendications 5 ou 6, les éléments de retard (14, 16, 18) comprenant respectivement un circuit diviseur de tension avec respectivement un élément d'impédance série (20) et un élément d'impédance parallèle (22) de sorte que le signal d'entrée de retard est présent sur un circuit série constitué de l'élément d'impédance série (20) et de l'élément d'impédance parallèle (22), et de sorte que le signal présent sur l'élément d'impédance parallèle (22) forme le signal de sortie de retard.

**8.** Dispositif selon une des revendications précédentes, l'élément de sortie ou respectivement au moins un des éléments de sortie (32) comprenant un élément d'émetteur pour la production d'un champ électromagnétique, et l'élément de capteur ou respectivement au moins un des éléments de capteur comprenant un capteur inductif et/ou un capteur capacitif.

**9.** Dispositif selon une des revendications précédentes, l'élément de sortie ou respectivement au moins un des éléments de sortie (32) comprenant un émetteur de lumière, en particulier une LED, et l'élément de capteur ou respectivement au moins un des éléments de capteur comprenant un capteur de lumière, en particulier une photodiode.

**10.** Procédé de définition de position, comprenant les étapes suivantes :

- délivrance d'au moins un premier signal de sortie périodique dans au moins une première position de sortie ;
- délivrance d'au moins un deuxième signal de sortie périodique, qui est déphasé d'une phase de retard par rapport au premier signal de sortie, dans au moins une deuxième position de sortie différente de la première ;
- détection au moins partielle d'au moins un des signaux de sortie périodiques en tant que signal de capteur périodique au moyen d'un élément de capteur (12) mobile par rapport aux positions de sortie ;
- détermination d'une position de phase du signal de capteur périodique par rapport aux positions de sortie ; et
- définition d'une position de phase de l'élément de capteur par rapport aux positions de sortie à partir de la position de phase déterminée du signal de capteur par rapport aux signaux de sortie,

les étapes de délivrance du premier et du deuxième signal de sortie périodique comprenant les étapes suivantes :

- préparation d'un signal d'entrée périodique ;
- production d'un premier signal de retard périodique par temporisation, d'une première phase de retard, du signal d'entrée périodique ;
- production d'un deuxième signal de retard périodique par temporisation, d'une deuxième phase de retard, du premier signal de retard périodique,

le premier ou respectivement le deuxième signal de sortie étant délivré en phase avec le premier ou respectivement le deuxième signal de retard.

11. Procédé selon la revendication 10, qui comprend une étape de préparation d'un signal de référence périodique de sorte que le déphasage du signal de capteur périodique par rapport au signal de référence est une fonction linéaire de la distance de l'élément de capteur à une position de référence.

12. Procédé de définition de position, comprenant les étapes suivantes :

- délivrance d'un signal de sortie périodique au moyen d'un élément de sortie mobile par rapport à une première et à une deuxième position de capteur ;
- détection au moins partielle du signal de sortie périodique dans au moins une des positions de capteur, au moins au nombre de deux, au moins en tant que premier et/ou deuxième signal de capteur ;
- production d'une première composante de signal de mesure périodique d'un premier signal de mesure périodique en fonction de la détection du premier signal de capteur de sorte que cette composante est déphasée, d'une première phase de retard, par rapport au premier signal de capteur ;
- production d'une deuxième composante de signal de mesure périodique d'un signal de mesure périodique en fonction de la détection du deuxième signal de capteur de sorte que cette composante est déphasée, d'une deuxième phase de retard différente de la première, par rapport au deuxième signal de capteur ;
- détermination d'une position de phase du signal de mesure périodique par rapport à un signal de référence ; et
- définition d'une position de l'élément de sortie par rapport aux positions de capteur à partir de la position de phase déterminée du signal de mesure par rapport au signal de référence.

FIG. 1

FIG. 2A

FIG. 2B

FIG. 2C

## FIG. 3A

## FIG. 3B

## FIG. 4A

## FIG. 4B

## FIG. 4C

## FIG. 4D

FIG. 5

Phase α der
Feldstärke

Ort x / Abstand w

x / w

FIG. 6

FIG. 7

Frequenz $f_x$    $R' = k * R$

$U_{e,x}$

FIG. 8

## FIG. 9

# FIG. 10

z - Sensorik

Frequenz $f_z$

x - Sensorik

Frequenz $f_x$

FIG. 11A

FIG. 11B

FIG. 11C

## FIG. 12

## FIG. 13

FIG. 14

FIG. 15

FIG. 16A

FIG. 16B

FIG. 16C

FIG. 17A

FIG. 17B

FIG. 17C

FIG. 17D

FIG. 17E

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 4007454 A